Europäisches Patentamt

European Patent Office

Office européen des brevets

(19)

(11) EP 1 330 817 B1

(12) **EUROPÄISCHE PATENTSCHRIFT**

(45) Veröffentlichungstag und Bekanntmachung des Hinweises auf die Patenterteilung:
20.07.2005 Patentblatt 2005/29

(21) Anmeldenummer: 01992999.1

(22) Anmeldetag: 31.10.2001

(51) Int Cl.⁷: **G10L 15/26**, G10L 15/18

(86) Internationale Anmeldenummer:
**PCT/EP2001/012632**

(87) Internationale Veröffentlichungsnummer:
**WO 2002/037473 (10.05.2002 Gazette 2002/19)**

(54) **ROBUSTE SPRACHERKENNUNG MIT DATENBANKORGANISATION**

ROBUST VOICE RECOGNITION WITH DATA BANK ORGANISATION

RECONNAISSANCE VOCALE ROBUSTE AVEC ORGANISATION DE BANQUE DE DONNEES

(84) Benannte Vertragsstaaten:
AT BE CH CY DE DK ES FI FR GB GR IE IT LI LU MC NL PT SE TR

(30) Priorität: 03.11.2000 DE 10054413
16.02.2001 DE 10107336

(43) Veröffentlichungstag der Anmeldung:
30.07.2003 Patentblatt 2003/31

(73) Patentinhaber: **VoiceCom solutions GmbH**
**90449 Nürnberg (DE)**

(72) Erfinder:
• **SCHIMMER, Klaus**
**90513 Zirndorf (DE)**
• **PLANKENSTEINER, Peter**
**91054 Erlangen (DE)**
• **HARBECK, Stefan**
**DE/91077 Kleinsendelbach (DE)**

(74) Vertreter:
**Leonhard, Frank Reimund, Dipl.-Ing. et al**
**Leonhard - Olgemöller - Fricke,**
**Postfach 10 09 62**
**80083 München (DE)**

(56) Entgegenhaltungen:
WO-A-00/14727

• NIESLER T.R.: "Category-based statistical language models, PhD thesis" Juni 1997 (1997-06) , DEPT. ENGINEERING, UNIV. OF CAMBRIDGE , U.K. XP002169563 Seite 24 -Seite 37 Seite 62 -Seite 70

• NOTH E ET AL: "Research issues for the next generation spoken dialogue systems" TEXT, SPEECH AND DIALOGUE. SECOND INTERNATIONAL WORKSHOP, TDS'99. PROCEEDINGS (LECTURE NOTES IN ARTIFICIAL INTELLIGENCE VOL.1692), TEXT, SPEECH AND DIALOGUE. SECOND INTERNATIONAL WORKSHOP, TSD'99. PROCEEDINGS, PLZEN, CZECH REPUBLIC, 13-17 SEPT. 1999, Seiten 1-9, XP002169560 1999, Berlin, Germany, Springer-Verlag, Germany ISBN: 3-540-66494-7

• F. GALLWITZ, M. ARETOULAKI, M. BOROS, J. HAAS, S. HARBECK, R. HUBER, H. NIEMANN, AND E. NOTH: "The Erlangen spoken dialogue system EVAR: A state-of-the-art information retrieval system" PROCEEDINGS OF THE 1998 INTERNATIONAL SYMPOSIUM ON SPOKEN DIALOGUE (ISSD'98), 1998, Seiten 19-26, XP002169561 Sydney, Australia

• F. GALLWITZ, E. NÖTH, H. NIEMANN: "Recognition of Out-of-Vocabulary Words and their Semantic Category" 2ND SQEL WORKSHOP ON MULTI-LINGUAL INFORMATION RETRIEVAL DIALOGS, April 1997 (1997-04), Seiten 114-121, XP002169562 University of West Bohemia, Plzen

• M.G. PCAK AND A.W. PRATT AND W.C. WHITE: "Automated morphosyntactic analysis of medical language" INFORMATION PROCESSING & MANAGEMENT, Bd. 12, 1996, Seiten 71-76, XP001002297 Pergamon Press, U.K.

- **YOUNG S R: "ESTIMATING RECOGNITION CONFIDENCE: METHODS FOR CONJOINING ACOUSTICSSEMANTICS, PRAGMATICS AND DISCOURSE" YOKOHAMA, JAPAN, SEPT. 18 - 22, 1994,YOKOHAMA: ASJ,JP, 18. September 1994 (1994-09-18), Seiten 2159-2162, XP000855714**

**Beschreibung**

Die Erfindung befaßt sich mit einem Verfahren zum Steuern eines Auskunft gebenden Informationssystems, wobei die Eingabe zum Informationssystem eine Sprechsteuerung ist. Mit der Sprache werden bestimmte Informationseinträge (Informationssegmente) der Datenbank angesprochen und abgerufen (spezifiziert und ausgewählt), die über einen Ausgabepfad zu einer zu veranlassenden Gerätefunktion oder zu einer wahrnehmbaren Mitteilung über das Informationssegment führen soll. Beide Ergebnisse sollen als "Kundgabe" bezeichnet werden (Anspruch 3).

Um Informationen durch eine Sprachabfrage verfügbar zu machen, muß der Abfragende möglichst natürlichsprachig anfragen können. Gleichzeitig muß die hinter der Sprachabfrage stehende Datenbank und Spracherkennung robust gestaltet sein, um eine natürliche Schnittstelle zwischen Mensch und Maschine zu erreichen, korrekte Informationen weitergeben zu können oder die richtigen Funktionen veranlassen zu können, und den Anfragenden nicht zu lange auf die Information oder die angefragte Funktion des Gerätes warten zu lassen, also schnell zu reagieren. Im Stand der Technik gibt es verschiedene Ansätze zur Steigerung der Robustheit einer Spracherkennung, z.B. eine verbesserte akustische Modellierung von Worten, vgl. **Schukat/Talamazzini** in "Automatische Spracherkennung Grundlagen, statistische Modelle und effiziente Algorithmen", Vieweg, 1995, Seiten 199 bis 230. Verbesserte linguistische und semantische Sprachmodelle sind eine andere Möglichkeit. Es hat sich jedoch in jüngster Zeit herausgestellt, daß beide Ansätze des Standes der Technik nur zu einer unwesentlichen Reduktion der Wortfehlerrate führen, die verbessert werden soll.

Um zu verdeutlichen, welche Komplexität eine Spracherkennung besitzt, soll auf das wesentliche Kriterium der Optimierung von Sprachmodellen, die Perplexität hingewiesen werden. Sie beschreibt den mittleren Verzweigungsgrad einer Sprache. Ist die Perplexität niedrig, so sinkt gleichzeitig die Menge der Worte, die potentiell einem erkannten Wort nachfolgen können. Bei der Erkennung von Diktaten, die zumeist einen sehr großen Wortschatz von über 60.000 Worten erkennen und verarbeiten können, läßt sich durch ein geeignetes Sprachmodell die Komplexität der Suche nach einer besten Wortkette erheblich reduzieren. Bei der Informationsabfrage ist der Ausgangspunkt ähnlich, es existiert ein Sprachinterface, das eine Anfrage aufnimmt und aus einer Datenbank die zugehörige Information bereitstellen soll oder eine entsprechende Aktion ausführen soll. Eine Anfrage in akustischer Form ist dabei allgemein definiert durch eine Anzahl von Attributen, die von der Spracherkennung mit unterschiedlichen Belegungen gefüllt werden sollen. Die für die Erkennung notwendigen Feldinhalte der Datenbank können dabei unter Umständen eine Vielzahl verschiedener Werte annehmen, z.B. alle Vornamen oder alle Nachnamen bei einer Telefonauskunft oder die Namen aller Städte bei einer Verkehrsauskunft, so daß genau an der für die Informationsabfrage kritischsten Stelle ein hoher Verzweigungsgrad der Sprache besteht, d.h. sehr viele von der Spracherkennung (Worterkennung) zu überprüfende Hypothesen vorliegen. Durch diese Vielzahl zu betrachtender Hypothesen steigt zum einen die Wahrscheinlichkeit, einem Attribut eine falsche Belegung (aus der Datenbank) zuzuweisen, zum anderen steigt die Bearbeitungszeit für die Dekodierung (Erkennung) der verbalen Äußerung, also des Sprachsignals.

Aus der **WO-A 00/14727** (One Voice Technology) ist ein interaktives Interface bekannt, das Sprache erkennt und in Zusammenhang mit der Schnittstelle zwischen einer verbalen Aussage und einer Benutzeroberfläche eines Computers Anwendung findet. Es werden zwei "grammar-files" verwendet, vgl. dort Seite 4, 5, von denen ein spezielles File als erste Datenbank zunächst Einsatz findet (vgl. dort Anspruch 19), um dann mit der gesamten Sprachaussage in die zweite (allgemeinere) Datenbank zu gehen, um ein evtl. Defizit an erkannten Worten oder Sinn aufzufinden. Es wird dazu eine Dialogabfrage verwendet, die bei Erkennungs-Fehlbestand aus der ersten Datenbank dem Benutzer einen erkannten Satz/Sinn anbietet (ein "Prompt"), der einen höchsten Konfidenzwert bei der ersten Worterkennung besaß. Abhängig von der dann erforderlichen Eingabe des Benutzers (Ja oder Nein), wird entweder ein Gesamtangebot eines bestimmten Kontextes auf dem Bildschirm aufgelistet, vgl. dort Seite 17, letzter Absatz, oder es wird bei einer Bestätigung der Abfrage dem erkannten Sinn nach eine Steuerung am Computer vorgenommen. Nachteilig ist, daß die Nachfrage beim Benutzer (Prompt) regelmäßig erforderlich ist und das System nur dann zuverlässig erkennen kann, wenn der Benutzer eine Bestätigung des mit höchstem Konfidenzwert erkannten Satzinhalt ausgeführt hat.

Die Erfindung hat sich **zur technische Aufgabe gestellt**, beim Zugriff auf Informationen einer Datenbank (unter der auch andere Datenquellen zu verstehen sind) eine möglichst robuste Worterkennung einzusetzen und die Anfrage in einer möglichst kurzen Zeit erfolgreich zu verarbeiten. Dies soll auch dann möglich sein, wenn die Belegung der zur Spezifikation der Datenbankabfrage notwendigen Parameter vielfältiger Art sind, was die Wahrscheinlichkeit einer Fehlererkennung genau dieser Belegungen erhöht.

Die Erfindung löst das Problem mit Anspruch 1, 10 und/oder Anspruch 21. Die Erfindung geht dabei davon aus, daß die Unterteilung einer Datenbank in kleinere Bereiche von Vorteil ist. Die Worterkennung kann robuster verarbeitet werden, wenn im Rahmen einer zunächst aktivierten Teildatenbank (ein beschränkter erster Informationsbereich) die Anzahl der Belegungen reduziert ist. Das führt zu einem robusteren und schnelleren System, das die Abfrage schneller beantwortet oder die gewünschte Aktion schneller ausführt.

Die Unterteilung in Teil-Datenbanken oder Datenbankenteil (im Anspruch als beschränkte Informationsbereiche benannt) kann beispielsweise durch bestimmte Benutzer- oder Benutzergruppenprofile beeinflußt sein, die bevorzugt für den ersten Informationsbereich, der anfänglich aktiviert ist, Einfluß nehmen (Anspruch 7).

Durch die Einschränkung möglicher Verzweigungen wird der Verzweigungsgrad reduziert und die Alternativen für eine schnellere Auswertung durch die Worterkennung herabgesetzt.

Zunächst ist ein erster Informationsbereich aus der Datenbank aktiviert, aus dem über ein erstes Sprachsignal ein Informationssegment abgefragt wird. Das Informationssegment korrespondiert mit einem Sprachsegment des gesamten Sprachsignals (oder vice versa). Beispielsweise kann das relevante Sprechsegment ein Nachname "Meier" oder "Fisher" sein, zu dem das Informationssegment eine bestimmte Telefonnummer im Datenbankeintrag ist. Eine andere Alternative wäre das Sprachsegment "Nürnberg" oder "New York", zu dem Zugverbindungen aufgefunden werden müssen, so daß das zugehörige Informationssegment Abfahrtszeiten von Zügen sein können, wenn der Ausgangsbahnhof zuvor festgelegt ist.

Die Datenbank ist so organisiert, daß zunächst ein beschränkter Bereich an gespeicherter Information für die Spracherkennung verfügbar ist. Kann aus diesem Bereich die spezifizierte Information (entsprechend dem Sprachsignalsegment) nicht bedient werden, kann sie also daraus nicht ausgewählt werden oder ist ein die Sicherheit kennzeichnender Konfidenzwert unter einem Schwellenwert, wird ein weiterer Informationsbereich statt dem ersten Informationsbereich aktiviert. Der weitere Informationsbereich kann größer, verlagert oder gänzlich anders sein (Anspruch 22, Anspruch 5).

Der zweite Informationsbereich kann auf einen dritten Informationsbereich der Datenbank erweitert werden, wenn zu dem Sprachsignalsegment kein korrespondierendes Informationssegment im zweiten Informationsbereich zugeordnet werden kann (Anspruch 4).

Fehlt eine Zuordnungsmöglichkeit zu einem Sprachsegment des Sprachsignals in dem aktuell zugänglichen (oder zugeschalteten) Informationsbereich, ist diesem Sprachsegment zumindest ein Attribut zur Auswertung zugeordnet, das aus einer von mehreren semantischen Kategorien ermittelt wurde (Anspruch 21), vgl. zu dieser Berechnung **Gallwitz, Nöth und Niemann,** "Recognition of Out-of-vocabulary Words and their Semantic Category", Proceedings of the 2nd SQEL Workshop on Multi-lingual Information Retrieval Dialogs, Plzen, April 1997, Seiten 114 bis 121. Die semantischen Kategorien ersetzen den konkreten Bezug zu einem Informationssegment in der Datenbank. Sie entsprechen Attributen, welche die Typen von unbekannten, insbesondere nicht mit ausreichender Konfidenz erkannten Worten beschreiben.

Eine Folge dieser Attributauswertung ist eine Ausweitung des Vokabulars der Datenbank, also eine Veränderung des Informationsbereiches, welcher der Sprach-und Worterkennung zugänglich gemacht wird (Anspruch 1, Anspruch 2). Es wird dazu zumindest ein nicht erkannter Signalabschnitt ausgewertet (Anspruch 19), der schon vorliegt und nicht neu aufgezeichnet zu werden braucht. Er ist weniger perplex, insbesondere zeitlich kürzer (Anspruch 24) und kann schneller und sicherer von der Spracherkennung ausgewertet werden.

Die Ausweitung kann abhängig von dem Attribut, insbesondere der semantischen Kategorie sein, welche dem unbekannten Sprachsegment zugeordnet wird (Anspruch 2). Die Abhängigkeit ist zumindest eine Mit-Abhängigkeit, keine ausschließliche Abhängigkeit. Mit der semantischen Kategorisierung kann trotz eines zunächst beschränkten Informationsbereiches der Datenbank schnell und robust eine Belegung aus der Datenbank zugeordnet werden, die als spezielles Informationssegment gewünscht wird. Die Anzahl der zugelassenen Wortketten (der Verzweigungsgrad) wird durch diese Art der Abfrage stark reduziert und damit auch die Vielzahl der zu betrachtenden Hypothesen, so daß die Wahrscheinlichkeit für eine falsche Belegung gesenkt wird und die Geschwindigkeit der Verarbeitung erhöht werden kann.

Diese neuerliche Auswertung eines schon vorhandenen Sprachsignalsegments aus dem ersten Sprachsignal kann auch als eine "Re-Analyse" angesehen werden, bei der nicht erneut der gesamte Inhalt des vorhergehenden Sprachsignals (dessen gesamte Länge, vgl. Anspruch 24) mit dem zweiten ausgewählten Informationsbereich in Verbindung gebracht wird, sondern nur ein schon vorhandener Signalabschnitt, dessen Konfidenzwert nicht hoch genug war, mit dem zweiten Informationsbereich erneut auf eine Erkennung hin "verbunden wird". Die Abhängigkeit des zweiten Informationsbereichs von dem Attribut (Anspruch 2, Anspruch 11) ist eine Möglichkeit, die Erkennung zu verbessern, ohne daß der Benutzer erneut eingreifen muß, auf ein "Prompt" (Systemanfrage) antworten muß oder um eine ergänzende sprachliche Information gebeten ("gepromptet") werden muß. Das so arbeitende System ist intelligenter und verwendet vorhandene Information mehrfach, re-analysiert sie also, und zwar nicht vollständig, sondern nur in zumindest einem Teilabschnitt. Dieser Teilabschnitt kann auch aus zwei oder mehr Teilabschnitten bestehen, die nicht mit hinreichender Konfidenz erkannt worden sind, so daß die Auswahl des weiteren Informationsbereiches von zumindest einem Attribut, aber auch von zwei Attributen abhängig sein kann. Die Auswahl des zweiten Informationsbereiches ist also zumindest mit-bestimmt von dem Attribut des nicht mit ausreichender Konfidenz erkannten Signalsegments (im Zeitbereich).

Teilt man die beiden Erkennungsschritte mit beschränkter erster Information (Merkmal b des Anspruchs 1) und des weiteren Informationsbereichs (Merkmal c des Anspruchs 1) in eine Analyse und eine Re-Analyse (erste und zweite und ggf. fortfolgende Analysen gemäß Anspruch 4) so ist erkennbar, daß dem Benutzer das Sprachsystem robuster und eigenständiger gegenübertritt, als mit einer erforderlichen Nachfrage, die eingangs beschrieben wurde.

Das schließt nicht aus, daß bei einem Scheitern einer so gesteuerten Suchstruktur sich später eine Dialogstruktur anschließt, wenn die Abhängigkeit vom Attribut nicht zu einer Erkennung mit ausreichendem Konfidenzwert in dem weiteren Informationsbereich führt. Zunächst ist das System aber in der Lage, mit der beschriebenen Re-Analyse (oder Reanalyse) einen weiteren Versuch der Erkennung zu machen, die mit einem reduzierten Signalabschnitt aus dem Signal arbeitet, das bereits vorliegt.

Eine andere mögliche Folge einer Attributauswertung ist eine an die semantische Kategorie angepaßte bzw. von dieser beeinflußte oder abhängige Signalabgabe, als Aufforderung, ein neues Sprachsignal vom Benutzer zu erhalten (Anspruch 10). Es ist zumeist weniger perplex, insbesondere zeitlich kürzer und kann schneller und sicherer von der Spracherkennung ausgewertet werden (Anspruch 24).

Eine entsprechende Einrichtung (Anspruch 25), bestehend aus Schaltungen oder realisiert aus Software im Rahmen eines Programms, führt die beschriebenen Verfahrensschritte aus, so daß ohne weiteres ersichtlich ist, welche funktionalen Elemente für die z.B. nach Anspruch 1 zunächst beschränkt zugelassene Information und für das anschließende Freigeben eines erweiterten Informationsbereiches zum Auffinden des mit einer Kategorie ersetzten (gekennzeichneten) unbekannten Sprachsignalsegments verwendet werden.

Eine Ausgabe kann aktuatorisch, visuell oder akustisch erfolgen, sie ist wahrnehmbar (Anspruch 3 oder 6).

Die Steuerung des Gerätes kann in einer Telefonanlage realisiert sein, die eine Verbindung zu einem gewünschten Gesprächspartner herstellt, der über die Datenbank mit einem Telefoneintrag verzeichnet ist, welcher Eintrag das Informationssegment darstellt, das über das Sprachsignal angesprochen wird.

Die Attribute (die semantischen Kategorien), die ein Sprachsegment kennzeichnen, dieses ersetzen oder diesem zugeordnet werden, das in dem aktuell aktivierten Informationsbereich der Datenbank nicht verfügbar ist, können beispielsweise Nachnamen, Vornamen, Firmen, Abteilungen oder Funktionen sein, wobei jedes dieser Attribute beispielsweise durch mehrere OOV-Worte oder Modelle repräsentiert wird (Anspruch 9) und beim Verändern des verfügbaren Informationsbereiches entsprechend berücksichtigt wird.

Die mehreren OOV-Modelle (OOV entspricht der Abkürzung für Out Of Vocabulary, also einem Fehlen eines entsprechenden Wortes im derzeit zugeschalteten oder verfügbaren Vokabular der Datenbank, welche der Sprachdekodierung als Erkennungswortschatz zur Verfügung steht) können unterschiedlichen Sprachen entsprechen, so ein Modell für beispielsweise Deutsch und eines für Englisch. Diese Erkennung ergibt eine Mithilfe bei der Erkennung der semantischen Kategorie des nicht oder mit einer zu geringen Konfizenz erkannten Wortes, welches einem Sprachsignalsegment eines Sprachsignals entspricht (Anspruch 9).

Ein OOV-Modell ist ein akustisches Modell, in dem verschiedene Teilmodelle parallel geschaltet sind. Teilmodelle als Lautmodelle (oder auch Phonemmodelle) werden verwendet, welche Modelle sprachenabhängig sein können. Die mehreren Teilmodelle, die ein OOV-Modell ergeben, arbeiten mit einer Übergangswahrscheinlichkeit zusammen, die Auskunft über die Wahrscheinlichkeit des Überganges von einem Teilmodell zu einem anderen Teilmodell gibt, wobei die Teilmodelle Elemente des OOV-Modells sind. Die Vollständigkeit eines OOV ergibt sich durch die Summe aller Teilmodelle und die Bewertung oder Vorgabe von Übergangswahrscheinlichkeiten zwischen den Teilmodellen.

Es soll zur Verdeutlichung ausgeführt werden, daß die fehlende Erkennung oder das Nicht-Enthalten in dem aktivierten Datenbankbereich (Anspruch 8) durch einen Schwellenwertvergleich repräsentiert ist. Es wird dabei von der These ausgegangen, daß ein zu geringer Konfidenzwert, der unter dem Schwellenwert liegt, einer Nichterkennung oder einem Nicht-Enthalten entspricht. Liegt der Konfidenzwert oberhalb eines Schwellenwertes, der beispielsweise zwischen 80% und 95% liegen kann, geht man von einem zutreffend erkannten Signalsegment aus und gibt das zugehörige Datenbanksegment aktuatorisch, visuell oder akustisch kund, so daß das Ergebnis sinngemäß wahrnehmbar ist.

Konnte der Konfidenzwert die Schwellenwertabfrage nicht überwinden, liegt also eine zu geringe Konfidenz vor, muß statt einem erkannten Signalsegment von einer bei der Sprachdekodierung mit ermittelten oder mit bereitgestellten semantischen Kategorie als ein allgemeineres Attribut des Sprachsignalsegmentes ausgegangen werden (Anspruch 13, Anspruch 21). Diese Kategorie kann bei der Spracherkennung gleich mit ermittelt werden, sie kann aber auch erst später ermittelt werden, wenn der Konfidenzwert zu der Worterkennung zu gering ist.

Bevorzugt ist also eine Auswertung der semantischen Kategorie vorgesehen, um eine "Systemantwort" zu bestimmen. Die Systemantwort liegt als innere Systemumstellung entweder in einer Veränderung der von der Datenbank zugänglich gemachten Information für die Sprachsignalerkennung (Anspruch 1) oder in einer nach außen erkennbaren Systemantwort durch eine wahrnehmbare Ausgabe, die von der semantischen Kategorie abhängt (Anspruch 10,20). Eine "Entsprechung zum ersten Sprachsignalteil" liegt beispielsweise in der semantischen Kategorie (Anspruch 11).

Ist der Teil des Sprachsignals der Begriff "Fischer" oder "New York", so entspricht dem die semantische Kategorie "Nachname" bzw. "Stadt". Insoweit ist auch der Begriff des "wesentlichen Abschnitts" als derjenige Teil des Sprachsignals zu verstehen (Anspruch 13), der von der Spracherkennung zu erkennen ist, um die Nutzinformation aus der Datenbank abzufragen. Gerade weil der Konfidenzwert zu gering war, konnte eine hinreichend sichere Zuordnung zum Datenbanksegment nicht erfolgen und es schließt sich die erfindungsgemäße Auswertung des weiteren Attributs an, wobei zu den Attributen sowohl der Konfidenzwert, wie auch die semantische Kategorie gerechnet werden kann. Kein Attribut ist das erkannte Wort, weil insoweit das erste Attribut (der Konfidenzwert) bereits durch Überschreiten des Schwellenwertes angab, daß eine ausreichende Sicherheit, das richtige Wort erkannt zu haben, vorliegt.

Es versteht sich, daß ein Sprachsignal in analoger oder digitalisierter Form vorliegen kann. Es muß nicht aktuell gesprochen werden, sondern das erste Signal kann über eine Sprachdatei ebenso verfügbar sein, wie über einen Übermittlungskanal aus einer größeren Entfernung zugespeist werden. Dieses Signal wird mit einer Dekodierung, die als Spracherkennung (Erkenner, Worterkenner) bezeichnet werden kann, verarbeitet, welche Spracherkennung als Modell und Algorithmus im Stand der Technik bekannt ist, vgl. **Schukat/Talamazzini,** "Automatische Spracherkennung - Grundlagen, statistische Modelle und effiziente Algorithmen", Vieweg 1995, wie eingangs angegeben.

Eine Steuerung über einen Dialog kann helfen, komplexe Erkennungsprobleme zu erleichtern. Dabei wird von einem ersten und einem zweiten Sprachsignal ausgegangen (Anspruch 6,18,12).

Das erste Sprachsignal ist dasjenige, mit dem das gewünschte Informationssegment spezifiziert werden soll. Kann dieses Informationssegment durch die Veränderung des verfügbaren Informationsbereiches nicht bereitgestellt werden, helfen insbesondere Attribute für nicht erkannte Sprachsegmente allein nicht weiter, wird eine wahrnehmbare Ausgabe als Rückkopplung erfolgen (Anspruch 10).

Der nicht erkannte Teil des Sprachsignals löst eine optische oder akustische Information aus, die abhängig davon ist, welches Attribut das nicht erkannte Sprachsegment besitzt (Anspruch 20). Handelt es sich um einen Nachnamen, kann konkret nach einem Namen gefragt werden. Handelt es sich um eine Stadt oder ein Urlaubsziel, kann eine daran angepaßte wahrnehmbare Rückkopplung zu dem Benutzer erfolgen. Das konkrete Wort kann dabei als Sprachsegment auch selbst in die Rückkopplung einfließen.

Erwartet wird vom Erkennungsverfahren dann ein zweites Sprachsignal (Anspruch 12, 18, 24 und Anspruch 6, zweite Alternative), das auf diese Rückfrage eingeht, wobei der erwartete Umfang der Perplexität (oder der Verzweigungsgrad) sehr gering ist, so daß aus der Datenbank die gesamte Nutzinformation für die Worterkennung zur Verfügung gestellt werden kann (Anspruch 12). Dieser Bereich kann aber auch auf denjenigen Bereich beschränkt werden, der durch das Attribut (die Kategorie) des nicht erkannten Sprachsegmentes vorgegeben ist (Anspruch 2). Ebenso kann im Vernunftsfall von einer sehr viel kürzeren Signallänge ausgegangen werden, die praktisch vollständig dem wesentlichen zu erkennenden Signalsegment entspricht (Anspruch 18).

Dieser Prozeß kann wiederholt werden, bis eine passende Belegung des Attributs im gespeicherten Wortschatz der Datenbank gefunden werden konnte. Kann das nicht erfüllt werden, schaltet das Verfahren um zur ersten Stufe (Anspruch 6, erste Alternative), gibt eine Standardfrage aus und wiederholt das zumindest einmalige schrittweise Erweitern des Informationsbereiches.

Die Abgabe einer Systeminformation, zur Aufforderung der Abgabe eines zweiten Sprachsignales, welche Aufforderung so orientiert ist, daß das zweite Sprachsignal eine Wiederholung des nicht auswertbaren ersten Signals ist, bildet eine Rückfallposition.

Die iterative Ermittlung (Analyse, Reanalyse) des spezifischen Informationssegmentes kann ohne eine Dialogaufforderung arbeiten (Anspruch 1); wird aber hier nach Erreichen der letzten Stufe, also des gesamten Informationsbereiches der Datenbank keine eindeutige Zuordnung des noch nicht festgelegten Sprachsegmentes zu einem Informationssegment festgestellt, kann auch hier eine Dialoginformation ausgegeben werden, zur Einholung eines zweiten Sprachsignals mit stark reduzierter Perplexität. Eine gänzlich automatisch arbeitende Variante ist es, bei dem ersten Informationsbereich mit Analyse und (zumindest einer) Reanalyse wieder zu beginnen, ohne Dialogstruktur.

Der erste Informationsbereich kann auf einen Benutzer (auch eine Benutzergruppe) zugeschnitten sein, durch Aufnahme von spezifischen Informationssegmenten, die von einem Benutzer, der in der Datenbank hinsichtlich seines Verhaltens oder seiner Eigenschaft (insoweit mit zumindest einer Eigenschaft), wie bevorzugten Verbindungen, normale Gesprächspartner, Sprachverhalten, Dialogverhalten und ähnliches, bekannt ist. Diese profilorientierte Steuerung des ersten Datenbereichs (des ersten aktivierten Informationsbereichs) hilft beim Eingrenzen der Perplexität des gesamten Sprachsignals auf diejenigen relevanten Informationen als Signalsegmente, die in erweiterten Informationsbereichen zur Belegung aufgesucht werden sollen.

Bei erfolgreicher Suche kann ein entsprechender Eintrag mit in das Profil des aktuell verbundenen Benutzers aufgenommen werden, um bei der nächsten Verwendung einen direkten Zugriff zu ermöglichen. Auf diese Weise kann diejenige Information, auf die ein spezifischer Benutzer (auch im Sinne einer Benutzergruppe) häufig zugreift, schnell und robust zur Verfügung gestellt werden, wobei gleichzeitig ein Zugriff auf seltene Informationen ermöglicht wird.

Ausführungsbeispiele erläutern und ergänzen die Erfindung.

**Figur 1** ist ein Schaubild als Mischprodukt aus einem Blockschaltplan und einem Funktionsablauf im Sinne eines Flußdiagramms.

**Figur 2** ist ein Sprachsignal $s_a(t)$, das analog dargestellt ist und ein Sprachsegment s1 während der Zeitspanne T1 enthält.

**Figur 3** ist ein sich selbst erklärendes Diagramm der Arbeitsweise der Veränderung des einem Dekoder zugänglichen Speicherbereichs.

**Figur 3a**
**Figur 3b**

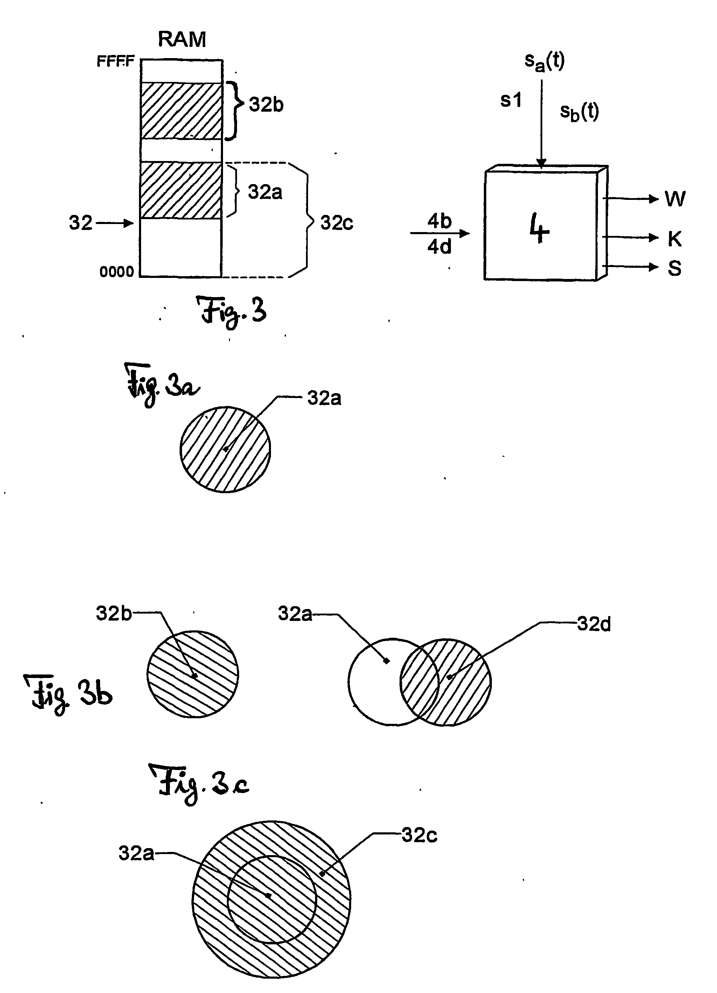

**Figur 3c** veranschaulichen Figur 3.

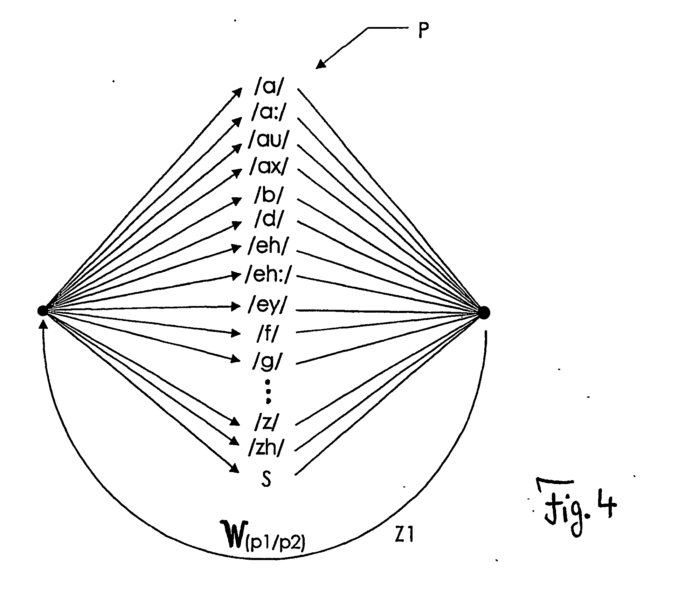

**Figur 4** ist eine Darstellung eines akustischen Modells für ein OOV.

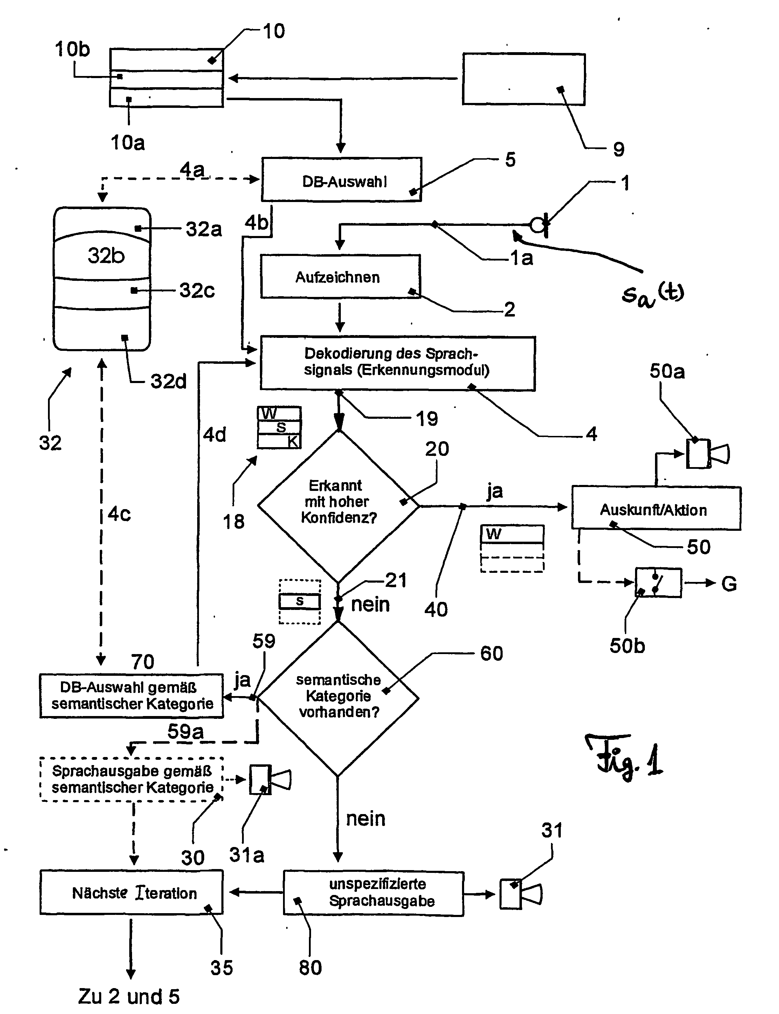

Das Ausführungsbeispiel der **Figur 1** veranschaulicht eine strukturelle Gestaltung eines Datenbanksystems mit einer akustischen Anfragemöglichkeit über den Kanal 1 a. Die strukturelle Darstellung ist durch Software realisierbar, parallel dazu ist in der Figur 1 gleichzeitig eine Art Ablaufdiagramm erkennbar, wie die innere Logik des Systems arbeitet.

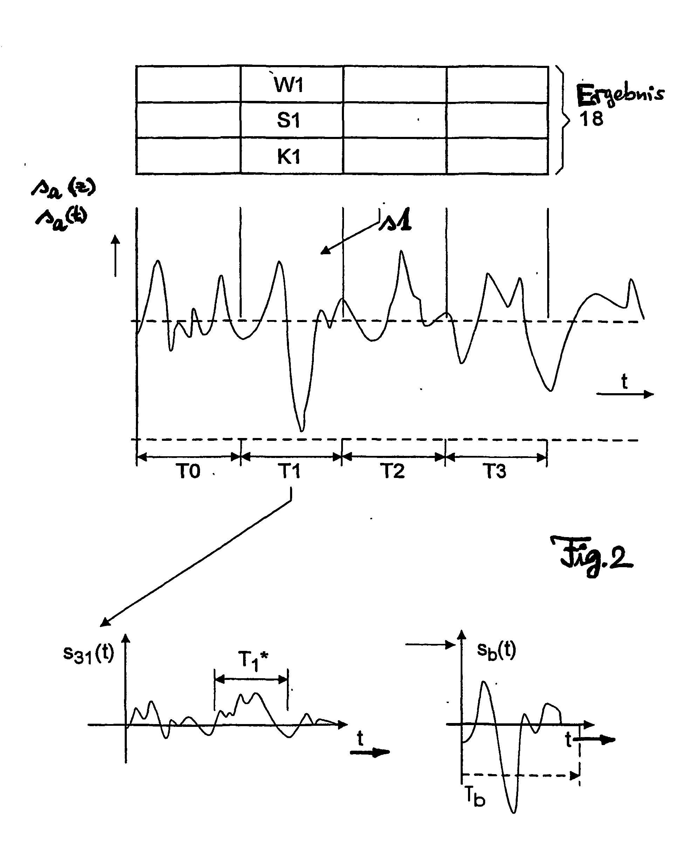

Das Sprachsignal $s_a(t)$ als Analogsignal oder als digitalisiertes Signal $s_a(z)$ ist aus Figur 2 ersichtlich, hier schematisch dargestellt. Dieses Sprachsignal wird über ein Mikrophon 1 bei 2 aufgezeichnet oder aufgenommen; es kann auch als eine Datei vorliegen, oder aber es wird über einen Übertragungskanal zugespeist. Eine mögliche Realisierung der Figur 1 ist in konkreter Gestalt eine Telephonanlage, die über den Funktionsblock 50 eine Auskunft bei 50a erteilt, alternativ dazu eine Funktion bei 50b einleitet oder eine Wahlverbindung herstellt. Diese "Aktion" soll die Steuerung des Gerätes kennzeichnen, wobei im folgenden generell von einer Informationsbereitstellung oder einer Kundgabe einer in der Datenbank 32 enthaltenen Information gesprochen werden soll.

Am Eingang ist das Mikrophon 1 gesondert dargestellt, der Übertragungskanal oder die Datei mit dem Sprachsignal nicht, so daß einfach von einem Eingang zu einem Dekoder 4 ausgegangen wird, dem ein Sprachsignal (beliebiger Herkunft) zugeführt wird. Die Dekodierung entspricht der Umwandlung von Sprache in Text mit Hilfe eines Worterkenners 4 (Worterkennung oder Spracherkennung), wobei daneben auch Attribute mit ermittelt werden, wie die semantische Kategorie S1 eines Signalsegments s1 oder eines Konfidenzwerts K1 zur Sicherheit der Ermittlung eines Wortes W1.

Die dargestellte Datenbank 32 enthält mehrere Bereiche 32a, 32b, 32c und 32d, gekennzeichnet durch unterschiedliche gespeicherte Informationen. Diese Information wird dem Dekoder 4 zur Verfügung gestellt, der aufgrund seines Sprachmodells versucht, Wortbegriffe aus der Datenbank den Sprachsignalen, besser: Segmenten des Sprachsignals zuzuordnen (sie zu "belegen").

Wird aufgrund des Sprachsignals durch den Dekoder 4 eine Anfrage korrekt erkannt, so wird über die Steuerleitung 40 eine korrekte Erkennung signalisiert, mit der eine Auskunft 50a erteilt wird oder eine Aktion durch Funktionsblock 50b veranlaßt wird. Wird die gesprochene Äußerung (als Sprachsignal $s_a(t)$) nicht vollständig erkannt, so werden über 21 und 60 die Funktionspfade 59,59a verwendet, die später erläutert werden.

Das Ausführungsbeispiel kann als Vermittlungssystem dienen, beispielsweise über Telephon, das bei Angabe eines Namens eine Verbindung mit der angegebenen Person bereitstellt. In der Datenbank 32 des Systems sind alle Namen, Firmen, Vornamen, evtl. Abteilung oder Funktionen enthalten, zusätzlich sind Standardworte enthalten, die im normalen Sprachgebrauch Verwendung finden, beispielsweise solche Begriffe wie "was", "ich", "Herrn", "Frau" und diverse Begrüßungen. Diese Standardworte befinden sich in einem ersten Informationsbereich 32a. Zusätzlich befinden sich hier benutzerabhängige Eigenschaften berücksichtigt. Ein Benutzer "Jack" identifiziert sich oder wird aufgrund eines Signals oder einer Sekundärinformation 9 authentifiziert und löst ein gespeichertes Profil aus, das aus mehreren Profilen in dem Speicher 10 zur Verfügung steht. Dieses Profil 10a, 10a, ... wird zum Informationsbereich 32a ergänzt, gesondert gespeichert oder definiert aus dem Informationsbereich 32a einen bestimmten Teilbereich, der dem Sprecher des Sprachsignals angepaßt ist oder mit ihm korrespondiert.

Dabei geht man zunächst von dem Regelfall aus, daß trotz einer Vielzahl gespeicherter Dateneinträge ein Benutzer erfahrungsgemäß mit maximal 200 bis 400 Personen telephoniert, so daß über den ersten Bereich 32a der Information die benutzerabhängigen 200 bis 400 Personen zugänglich sind, wenn das zu einem bestimmten Benutzer gehörige Profil 10a, 10b ausgewählt ist.

Ein Ablauf des Systemverhaltens mit einer Benutzeranfrage wird in einem Beispiel folgendermaßen ablaufen. Über einen Lautsprecher 50a oder einen Kanal zur Einspeisung in einen Telephonhörer wird ein Systemprompt ausgegeben, das beispielsweise "Was kann ich für Sie tun?" lautet. Der Benutzer antwortet mit einem ersten Sprachsignal $s_a(t)$, beispielsweise "Ich möchte mit Herrn **Müller** sprechen". Das System führt eine Spracherkennung mit dem eingehenden ersten Sprachsignal durch, wobei angenommen wird, daß das Signalsegment s1 während der Zeitspanne T1 von Figur 2 den Begriff "Müller" (als semantische Kategorie: Nachname) entspricht.

**Findet** der Dekoder 4 in der Datenbank 32 im ersten Informationsbereich 32a zu dem Sprachsegment "Müller" einen spezifischen Informationseintrag (beispielsweise seine Telephonnummer), so kann das System diesen auswählen und über den Kanal 20,40,50 mit einer Auskunft die Anfrage beantworten, beispielsweise durch "Es wird mit Herrn Müller verbunden".

Der oben beschriebene Systemablauf ist der meist gewünschte, schnell arbeitende Weg, bei dem die Spracherkennung 4 (das Erkennungsmodul) das aufgezeichnete Signal von dem Mikrophon 1 über die Signalzuführung 1 a nach Aufzeichnen bei 2 mit einer so hohen Konfidenz K1 erkennt, daß eine Zuordnung des zugehörigen Datenbankeintrages aus dem ersten Informationsbereich 32a die Ausgabe der Auskunft für den Signalpfad 40 (hier des Wortes W1, insbesondere einer Telefonnummer, die mit dem Wort "Müller" in der Datenbank 32 korrespondiert) zu der Ansteuerung 50 und dem Lautsprecher 50a ermöglicht. Schematisch ist das an der Ablaufsteuerung so vorgesehen, daß eine zunächst initiale Auswahl der Datenbank von einer dazu vorgesehenen Funktion 5 über die Leitung 4a,4b vorgenommen wird, also der erste Datenbankbereich 32a über die Datenleitung 4b der Erkennung 4 zur Verfügung gestellt wird. Als eine Verfügbarmachung kann auch eine Übertragung des gesamten Datenblocks in einem DMA-Prozeß erfolgen, so daß das Erkennungsmodul 4 auf die im Datenbankabschnitt 32a verfügbaren Daten zugreifen kann.

Im beschriebenen Beispiel der Telefonanlage ist mit der Erkennung des Wortes "Müller" bei hoher angenommener Konfidenz, also bei einem Überschreiten eines Mindest-Schwellenwertes des Konfidenzwerts K, von einer zutreffenden Erkennung auszugehen. Sie veranlaßt eigentlich zwei Funktionen, sowohl die Ausgabe einer Systembestätigung (es wird mit Herrn Müller verbunden), wie auch die Durchführung einer Aktion als aktuatorische Reaktion über 50b zur Weitergabe an das technische Gerät G, hier die Telefonanlage, die eine entsprechende Verbindung auch tatsächlich durchführt.

Die eingezeichneten Attribute S,K in einem schematisch dargestellten Block 18 aus Erkennungswerten zeigen das Ergebnis des Erkennungsmoduls 4, das dazuhin noch eine Worterkennung bereitstellt. Die beiden Attribute sind die semantische Kategorie S und der Konfidenzwert K, zugeordnet dem in Figur 2 erkennbaren Zeitbereich T1, bzw. dem hier vorliegenden Signalabschnitt s1 des Sprachsignals $s_a(t)$. Die Abfrage 20 führt einen Vergleich des Attributes "Konfidenzwert" K1 durch. Bei Überschreiten der Schwelle wird über den Pfad 40 das erkannte Wort W1 ausgegeben, oder eine zugehörige Sachinformation über den Lautsprecher 50a, und/oder eine zugehörige Aktion zur Einleitung der Verbindung 50b. Weitergegeben wird von den Erkennungswerten 18 also nur der Teilbereich W, nach Auswertung des zweiten Teilbereiches K.

Es soll hier nicht näher erläutert werden, wie der Zeitbereich T1, der hinsichtlich des Abfragewunsches der wesentliche Abschnitt des Signals ist, ermittelt wird. Er kann aufgrund des Gesamtsignals ermittelt werden, aufgrund von akustischen Modellen oder aufgrund von Schlüsselwörtern, auch aufgrund einer semantischen Analyse des gesamten Sprachsignals, wie in Figur 2 dargestellt. Solche Berechnungen sind eingangs als Stand der Technik beschrieben worden, so daß für die Steuerung davon ausgegangen wird, daß am Ausgang 19 der Erkennung 4 die ermittelten Nutzinformationen W, S und K zur Verfügung stehen, von denen der Vergleich 20 den Konfidenzwert K auswertet und das Wort W bei ausreichendem Konfidenzwert an die Auskunftsfunktion 50 weitergibt, im oben beschriebenen Sinn.

Liegt der Eintrag Müller im Informationsbereich 32a des angenommenen ersten Benutzers nicht vor, findet er sich also in dem ersten Datenbereich nicht, so ändert sich das Verhalten des Systems bzw. die Systemantwort, wobei angenommen wird, daß dem Signalabschnitt "Müller" während des zeitlichen Abschnitts T1 kein korrespondierender Worteintrag W1 aus dem ersten Bereich 32a zugeordnet werden kann. Der Dekoder 4 löst deshalb über die Leitung 19 eine Kennzeichnung des Signalsegments s1 aus, durch Belegung dieses noch unbekannten Wortes mit einem Attribut (semantische Kategorie). Dieses Wort entspricht einem Typ, also einem Attribut, der hier "Nachname" heißt. Als Systemantwort kann über einen Lautsprecher 31 a oder über die Leitung des Telephonhörers die $s_{31}$ (t)-Ausgabe erfolgen, daß "der von Ihnen genannte Name sich nicht im Telephonbuch befindet; mit **welcher Person** wollen Sie sprechen?". Die Attribut-Kennzeichnung belegt den unbekannten Abschnitt s1 des Sprachsignals mit einer semantischen Kategorie. Durch diese semantische Kategorisierung kann das System spezifisch eine Rückfrage bei 31a ausgeben, die eine Umstellung des Systems hinsichtlich eines erwarteten zweiten Sprachsignals $s_b(t)$ vornimmt, das in Figur 2 veranschaulicht ist. Das System stellt sich dabei in 35 für eine neue Iteration darauf ein, daß das zweite Sprachsignal eine reduzierte Perplexität, also einen geringeren Verzweigungsgrad der Syntax und der Worte besitzt, namentlich erwartet das System vom Wesen her nur einen Nachnamen. Dieser Signalabschnitt $T_b$ ist in der Regel zeitlich kürzer und kann fast vollständig einem Datenbankeintrag zugeordnet werden. Für die folgende Spracherkennung mit derselben Dekoder(schaltung) 4 kann dazu ein größerer, jedenfalls ein zumindest teilweise anderer Informationsbereich der Datenbank über 4c,4d zugeschaltet oder aktiviert werden, so der gesamte Bereich 32 aus allen Segmenten 32b, 32c, 32d, wobei das bislang vorliegende erste Segment 32a zugeschaltet bleiben kann oder ausgeblendet werden kann.

Aufgrund der geringen Perplexität kann in dem veränderten Bereich oder dem gesamten Bestand an Nutzinformation der jetzt mit zweitem Sprachsignal $s_b(t)$ eintreffende Begriff sicher aufgefunden werden und eine Erkennung über den Kanal 40,50,50a signalisiert werden.

Die oben beschriebene Betriebsweise des Systems als eine geänderte Systemantwort (im Sinne einer inneren Veränderung der Funktion) soll ausgehend von dem auch zuvor beschriebenen Vergleich mit dem Konfidenzwert in der Abfrage 20 vertieft werden. Hier wird angenommen, daß der Konfidenzwert unter dem genannten Schwellenwert liegt, der bei 80%, 90% oder 95%, jedenfalls unter 100% liegen kann. Gestützt auf die These, daß ein ungenügender Konfidenzwert K1 für den "wesentlichen" Abschnitt s1 (wesentlich im Sinne der für die Betriebsweise wesentlichen und nicht notwendig im Sinne eines zeitlich langen oder großen Abschnittes) einer Nichterkennung oder einem Nicht-Enthalten des gesuchten Wortes W1 entspricht, wird ein weiteres Attribut des Erkennungsergebnisses 18 ausgewertet, namentlich die semantische Kategorie, die mit S1 für den Zeitabschnitt T1 in Figur 2 bezeichnet ist. Sie wird über den Ablaufpfad 21, entsprechend einem Signalweg oder einer Programmverzweigung weitergegeben und einer Überprüfung 60 übertragen, die abfragt, ob eine semantische Kategorie von dem Erkennungsmodul 4 erkannt worden ist. Die semantische Kategorie war zuvor erläutert. Sie entspricht dem Typ des nicht erkannten Wortes W1 im Abschnitt T1. Ist eine solche Kategorie vorhanden, kann das System auf zweierlei Wege verzweigen, die sowohl alternativ, wie auch kumulativ möglich sind. Diese beiden Verzweigungen sind mit 59 und 59a vorgesehen.

Weg 59: Liegt eine semantische Kategorie vor, wird von der Funktionalität 70, die als Programm oder Ablaufsteuerung vorliegen kann, der Zugriff auf die Datenbank 32 verändert, bezogen auf das Erkennungsmodul 4. Diese Zugriffsveränderung erfolgt über die eingezeichneten Signalpfade 4c und 4d, wobei auch hier ein Verfügbarmachen eines zweiten Datenbanksegmentes angesprochen ist, ebenso wie eine Übertragung der gesamten Daten eines anderen Datenbanksegmentes, z. B. des Bereiches 32b, zum Erkennungsmodul 4. Das andere Datenbanksegment ist in den **Figuren 3, 3a, 3b und 3c** symbolisch erläutert. Mit der Funktion 70 wird eine Datenbank-Auswahl gemäß der vorhandenen semantischen Kategorie vorgenommen. Das entspricht einer Veränderung des bislang der Erkennung zur Verfügung gestellten Datenbereichs 32a. Es kann ein gänzlich anderes Segment 32b zugeschaltet werden, beispielsweise das Segment, in dem alle Nachnamen enthalten sind. Es kann eine Erweiterung der Datenbank stattfinden, wie mit 32c symbolisiert. Das entspricht einem größeren Datenbankbereich in einem größeren Adressenbereich. Schließlich ist aus dem Speicher 32 auch eine Teilüberschneidung 32d mit dem bisher ersten Datenbereich 32a möglich, wie in Figur 3b dargestellt.

In diesen Figuren 3a, 3b, und 3c ist nach Art der Mengenlehre dargestellt, welcher Informationsbereich der Datenbank im Anschluß an den Anfangs-Datenbereich 32a über die Funktionssteuerung 70 möglich ist. Es kann ein gänzlich außerhalb des ersten Datenbankbereiches 32a liegender zweiter Datenbankabschnitt 32b vorgesehen sein. Ebenso kann eine Teilüberschneidung 32d vorgesehen sein, wie auch eine Erweiterung der Datenbank 32c, die den bisherigen Datenbankbereich 32a mit umfaßt und zusätzlich Nutzinformation ergänzt. Die so gebildete zweite Menge von Nutzinformation aus der Datenbank wird der Erkennung 4 gemäß Figur 3 zur Verfügung gestellt, um aus dem noch vorliegenden, aufgezeichneten ersten Signal (aus der Funktion 2) dem im ersten Versuch nicht ermittelten Zeitabschnitt T1 oder dem neuen Signal $s_b(t)$ ein Datenbanksegment, sprich einen Datenbankeintrag zuordnen zu können. Die Auswertung ergibt einen neuen Satz von Erkennungsdaten 19, bestehend aus einem Wort W, einem zugehörigen Konfidenzwert K sowie dem an sich gleichbleibenden Attribut der semantischen Kategorie S. In der Abfrage 20 wird der Konfidenzwert erneut mit dem Schwellenwert verglichen, was in den meisten Fällen zu einem Erkennungsergebnis für W führt, das zu der angefragten Auskunft über den Pfad 40,50,50a oder 40,50,50b (mit Veranlassung einer technischen Funktion) führt.

Weg 59a: Eine oben schon angesprochene zweite Verzweigungsmöglichkeit aus der Abfrage 60, ob eine semantische Kategorie vorhanden ist, führt über den Signalpfad oder Programmpfad 59a. Liegt eine semantische Kategorie vor, kann eine Sprachausgabe über einen Lautsprecher 31a erfolgen, die an die semantische Kategorie angepaßt ist. Es kann spezifisch nach einem Nachnamen gefragt werden, es kann spezifisch nach einem Ort gefragt werden, es kann spezifisch nach einer Abteilung gefragt werden, je nachdem, wie viele semantische Kategorien vorgesehen sind. Diese Sprachausgabe wird von der Funktion 30 gesteuert. Der Lautsprecher 31a kann dabei separat sein, er kann aber ebenso der Lautsprecher 50a sein, was in dem Funktionsschaltbild nicht gesondert dargestellt ist.

Aufgrund der Veranlassung ist das System jetzt in einen Zustand versetzt, sich als Systemantwort so einzustellen, daß eine von einem Benutzer erwartete zweite Signaleingabe entsprechend einem zweiten Signalverlauf $s_b(t)$, leichter, schneller und gezielter verarbeitet werden kann. Das System ist mithin schon fertig mit seiner Anpassung und nicht mehr von Überlegungen des Benutzers abhängig. Die Einstellung oder Umstellung des Systems entsprechend dem Signalpfad 59a, 30, 31a, in Verbindung mit einer erfolgenden Iteration 35, die zu den Funktionsblöcken 2 und 5 führt, reicht aus, um anschließend optimiert erkennen zu können. Das erwartete Signal $s_b(t)$ entspricht im einfachsten Fall nochmals und nur dem Signalabschnitt s1, wenn der Nachname, der zuvor nicht erkannt werden konnte, wiederholt wird, weil die Signalaufforderung 31a nur nach einer Person gefragt hat. Es wird dem Erkennungsmodul 4 also ein neues Signal zur Verfügung gestellt, über das Mikrophon 1, die Signalleitung 1a und die Aufzeichnung 2 dieses kürzeren Signals, so daß jetzt eine neue Nutzinformation 18 aus einem Wort, einer semantischen Kategorie und einem Konfidenzwert bei 19 zur Verfügung gestellt werden kann, wobei der Konfidenzwert wesentlich höher sein wird, bevorzugt gleich so hoch, daß der Schwellenwert überschritten wird und eine dem Wort W1 entsprechende Signalausgabe oder Funktion 50a, 50b veranlaßt werden kann.

Bei diesem betrieblichen Ablauf kann die Datenbank in ihrem verfügbaren Bereich unverändert bleiben. Sie kann aber auch gemäß dem Funktionsblock 70 im Sinne obiger Beschreibung zu der Verzweigung 59 verändert werden, in denjenigen Rahmenbedingungen, die anhand der Figur 3 beschrieben wurden. Diese Funktion wird für die beschriebene Ablaufsteuerung dann von der Datenbank-Auswahl 5 vorgenommen, die über die Steuerleitung 4a,4b einen neuen Bereich von Nutzinformationen dem Modul 4 zur Verfügung stellen.

Im Folgenden soll die semantische Kategorie näher erläutert werden.

Die semantische Kategorie gibt bei 70 vor, welches Segment der Datenbank 32 für die Dekodierung 4 zur Erkennung des Sprachsignals $s_a$ oder $s_b$ zugeordnet wird. Hier gibt es beispielsweise die Attribute Namen, Vornamen, Firmen, Abteilung, Funktionen, wenn von einer Telephonanlage ausgegangen wird. Hier können sich die Attribute Zugtyp, Orte, Tageszeiten (Vormittag, Nachmittag, Nacht) befinden, wenn von einer Zugauskunft ausgegangen wird. Andere Attribute sind je nach Anwendungszweck belegbar (z.B. auch Sprachen).

Das unbekannte Sprachsignalstück s1 oder das neue kürzere Stück $s_b(t)$, das zwar hinsichtlich seines Attributes erkennbar war oder bekannt ist, aber nicht hinsichtlich seines konkreten Inhaltes, wird dem Dekoder durch Funktion 2 bereitgestellt, wobei die Datenbank 32 (beispielsweise über eine Steuerung des Adressierungsbereichs des Dekoders 4) entsprechend angesteuert wurde.

Beim Umgang mit dem beschriebenen Informationssystem fällt auf, daß ein Benutzer nur selten an allen Informationen der Datenbank 32 interessiert ist. Es gibt demnach ein Profil 10a,10b in einer Profilsammlung eines Speichers 10, die eine Teilmenge des ersten Bereichs 32a der Datenbank beschreibt, eingrenzt oder ergänzt. Dieses Profil kann entweder benutzerorientiert sein, oder aber durch andere strukturelle Eigenschaften des Benutzers motiviert sein. Durch die vorgegebenen verschiedenen Bereiche 32a,32b,... ergibt sich eine Struktur der Datenbank 32. Die Informationsabfrage arbeitet zunächst mit begrenzter Information 32a, die bevorzugt aber benutzerorientiert gestaltet ist. Die begrenzte Information ist nicht das Ende der verfügbaren Information, sondern der Beginn, eventuell nicht vorhandene (und nicht mit Worten belegbare) Signalsegmente in anderen Bereichen der Datenbank zu lokalisieren.

Zunächst steht aber nur der von dem Profil beeinflußte Informationsbereich 32a für die Worterkennung im Dekoder 4 zur Verfügung. Um Verwechslungen zwischen erkannten Worten zu vermeiden, wird bei der Worterkennung das akustische Maß eingeführt, das als Konfidenzwert K bezeichnet ist. Dieser Wert dient als Maß für die Robustheit der Erkennung 4. Wird der Signalabschnitt s1 mit ungenügendem Konfidenzwert erkannt (wobei der Konfidenzwert unter dem zuvor festgelegten Schwellenwert liegt), so wird das gesuchte Wort als "nicht erkannt" angesehen und eine Attributauswertung vorgenommen, bezogen auf das zweite Attribut "semantische Kategorie", das Bestandteil des Erkennungsergebnisses 19 ist.

Diese semantische Kategorie ist sehr grober Natur und steht in direktem Zusammenhang zu den Tabelleneinträgen der Datenbank.

Die Umschaltung in einen anderen Bereich, um das in dem bisherigen Bereich nicht erkannte Sprachsegment zu belegen, zum Auffinden des von dem Sprecher gewünschten Informationssegmentes, arbeitet auch mehrstufig. Es können mehrere weitere Bereiche 32b,32c,32d vorgesehen sein, die nacheinander verwendet werden.

In einem anderen Beispiel kann das Attribut S1 einen dieser Bereiche vorbestimmen, in der die Suche fortgeführt wird. Erreicht das System gemäß Figur 1 den letzten Bereich, ohne über den akustischen Dekoder 4 zu dem Sprachsegment s1 einen korrespondierenden Eintrag W1 oder die zu diesem Sprachsegment gehörende Information aufzufinden, schaltet das System zurück und fordert den Benutzer auf, das weitere Sprachsignal abzugeben. Die erneute Prüfung des neu gesprochenen Signals erfolgt zuerst mit dem ersten Bereich 32a der Information, zumindest einstufig iterativ erweitert durch die zuvor beschriebene Steuerung 70 anhand der semantischen Kategorie.

Im Zusammenhang mit der Systemantwort durch eine Sprachausgabe 30,31a abhängig von der semantischen Kategorie, wurde in Figur 2 symbolisch die Sprachausgabe $s_{31}(t)$ aufgezeigt. Sie entspricht dem Zeitabschnitt T1 bzw. dem Signalabschnitt s1 in diesem Zeitbereich. Das Entsprechen ist so zu verstehen, daß dem Signalverlauf $s_{31}(t)$ ein Signalabschnitt $T_1^*$ innewohnt, der die Entsprechung zu dem nicht mit hinreichender Konfidenz erkannten Signalabschnitt s1 trägt. Ein Beispiel verdeutlicht die "Entsprechung". Der unbekannte Signalabschnitt ist der **Nachname** selbst, beispielsweise "Fischer" oder "Jones". Die Signalantwort bei nicht ausreichender Konfidenz und einer Sprachausgabe entsprechend der erkannten semantischen Kategorie S1, ist die Nachfrage "Welche Person wollen Sie sprechen?", wobei der Begriff "Person" dem Signalverlauf im Abschnitt $T_1^*$ entspricht. Die Entsprechung ist also eine semantische Kategorie, die sprachlich ausgegeben wird, entsprechend einem nicht erkannten Namen, der dem Abschnitt s1 entspricht. Selbstverständlich sind diese Signalabschnitte nicht von ihrem Zeitablauf gleich, sie sind nur von ihrem Bedeutungsgehalt vergleichbar, indem die semantische Kategorie abstrakt den Inhalt des Signalabschnittes s1 umschreibt.

Das System erwartet nach der Signalausgabe $s_{31}(t)$ ein zweites Sprachsignal $s_b(t)$. Dieses Sprachsignal ist von der Komplexität erheblich geringer. Es kann die gesamte Information der Datenbank mit mehreren, insbesondere allen Informationsbereichen 32a,32b, 32c,32d zur Decodierung dem Dekoder 4 freigegeben werden. Diese Art der restriktiven Dialogstrategie erlaubt statt der gleichzeitigen Nennung unterschiedlicher Datenbankfelder (wie zum Beispiel die Nennung von Name, Vomame und Firmenbezeichnung) nur die Nennung eines einzigen Datenbankfeldes. Bei der Erkennung des Inhalts dieses Datenbankfeldes über die Spracherkennung 4 werden nicht nur die Worte des vom Profil 10a,10b freigegebenen Informationsabschnitts im ersten Informationsbereich 32a verwendet, sondern alle Werte der gesamten Datenbank 32, ggf. auch ohne den ersten Bereich 32a.

Aus der Struktur der Datenbank 32 ergeben sich die Festlegungen, daß die einzelnen Informationsbereiche 32a,32b, 32c,32d echte Teilmengen der Gesamtinformation 32 sind. Es ist zumeist sinnvoll, der erste Bereich 32a vom Benutzer abhängig zu machen, wie zuvor beschrieben. Diese Abhängigkeit geschieht durch ein Profil. Das Profil beschreibt das typische Verhalten eines bestimmten Benutzers beim Umgang mit dem Dialogsystem gemäß Figur 1. Das Profil wird eine Teilmenge der zur Verfügung stehenden Datenbank spezifizieren (beeinflussen). Kann eine Gruppe von Benutzern gleich behandelt werden, so trifft das Profil auf mehrere Benutzer zu, die objektiv vergleichbare Eigenschaften besitzen.

Die beschriebenen semantischen Kategorien kennzeichnen als Attribut das eigentlich nicht erkannte Sprachsegment s1 hinsichtlich seiner übergeordneten Bedeutung (seiner semantischen Kategorie), ohne daß die Spracherkennung im Dekoder 4 das eigentlich gesprochene Wort erkennt. Bevor eine solche Zuordnung geschehen kann, wird jedem Wort in der Datenbank 32 eine Bedeutung (Semantik) aus einer zuvor bekannten, endlichen Menge von Bedeutungen zugewiesen, so daß nur eine endliche Menge von Bedeutungen zugewiesen werden kann. Jede dieser Bedeutungen wird als semantische Kategorie bezeichnet.

Innerhalb des Erkennungsmoduls 4 können unterschiedliche OOV-Modelle zum Einsatz kommen. Unterschiedliche semantische Kategorien besitzen auch andere OOV-Modelle. Ein solches OOV-Modell ist ein akustisches Modell, bei dem mehrere (verschiedene) Teilmodelle parallel geschaltet werden, wie Figur 4 zeigt. Häufig werden alle Lautmodelle verwendet, wobei ein Teilmodell allgemein mit P benannt ist. In Figur 4 sind eine Vielzahl von Lautmodellen vorgegeben. Sie können sprachenabhängig sein, wobei im Beispiel von deutschen Lautmodellen (bei der deutschen Sprache) ausgegangen werden soll. Einige solcher Lautmodelle sind /a/, /a:/, /ai/, /au/, /ax/, /b/, /d/, /eh/, /eh:/, /ey/, /f/, /g/, ... /r/, /s/, /sh/, /t/, ... /z/ und /zh/. Damit das OOV-Modell von Figur 4 einen variabel großen Zeitraum s1 abdecken kann, gibt es eine Schleife Z1, die das Auftreten einer Sequenz oder Folge von Teilmodellen P in dem OOV-Modell abdeckt. An dem Schleifenübergang Z1 zwischen dem linken und dem rechten Knoten ist eine Übergangswahrscheinlichkeit definiert, die mit W(p1 | p2) benannt werden soll. Diese Übergangswahrscheinlichkeit liegt zwischen dem linken und dem rechten Knoten von Figur 4. Sie gibt Auskunft über die Wahrscheinlichkeit des Übergangs von einem Lautmodell p2 zu dem nächsten Lautmodell p1, die als jeweiliges Teilmodell jeweils ein Element des OOV-Modells mit allen Teilmodellen P sind. Ein OOV-Modell ist demnach vollständig definiert durch die Menge aller Teilmodelle P und eine Bewertung oder Vorgabe der Übergangs-Wahrscheinlichkeit W(p1 | p2) für alle p1,p2 in P.

Innerhalb des Erkennungsmoduls 4 werden die unterschiedlichen OOV-Modelle zum Einsatz gebracht. Unterschiedliche semantische Kategonen besitzen auch andere OOV-Modelle, was an einem Beispiel illustriert werden soll. Für dieses Beispiel existieren die semantischen Kategorien "Strasse" und "Stadt" in deutscher Sprache und sollen gegenübergestellt werden. Ein Großteil aller Strassen (der Namen der Straßen) besitzt ein Postfix "Straße", wie z.B. die Goethestrasse. Dadurch sind Übergangswahrscheinlichkeiten zwischen den Elementen dieses Postfixes gegeben, die folgendermaßen lauten:

$$W_1(p1="t"|p2="s")$$

$$W_2(p1="r"|p2="t")$$

$$W_3(p1="a"|p2="r")$$

$$W_4(p1="s"|p2="a")$$

$$W_5(p1="s"|p2="s")$$

$$W_8(p1="e"|p2="s")$$

Diese Wahrscheinlichkeiten sind bei Auswerten des Postfixes "Strasse" wesentlich höher im OOV-Modell der semantischen Kategorie "Strasse", als in dem OOV-Modell der anderen semantischen Kategorie "Stadt". Dadurch kann eine semantische Kategorie zugeordnet werden.

Auch eine Unterscheidung der Teilmodelle P selbst ist sinnvoll, wenn eine Unterscheidung von semantischen Kategorien von englischen Namen und deutschen Namen (als zwei unterschiedliche semantische Kategorien) verwendet werden soll. Statt der beschriebenen deutschen Lautmodelle P von Figur 4 werden dann englische Lautmodelle verwendet, die hier nicht gesondert dargestellt sind.

Mit den für jede semantische Kategorie angepaßten oder vorgegebenen OOV-Modellen ist eine Worterkennung gerade von nicht in der Datenbank 32 enthaltenen Datenbanksegmenten im Zeitbereich T1 robuster, nachdem die Modellierung adäquater für diese semantische Kategorie ist.

Ist in dem Beispiel von Figur 1 beim Weg 59 ein Sprachsignalsegment s1 aus dem ersten Sprachsignal $s_a(t)$ vorhanden, das im ersten Informationsbereich 32a der Datenbank 32 nicht enthalten ist, wird ein weiterer Informationsbereich der Datenbank als zweiter Informationsbereich aktiviert. Das Nicht-Enthalten entspricht einem Erkennungsergebnis 18 aus dem Erkennungsmodul 4, wobei die semantische Kategorie und der Konfidenzwert ermittelt werden, aber der Konfidenzwert den Schwellenwert nicht überschreitet. Dabei ist zumindest ein akustisches Modell gemäß Figur 4 vorgegeben, insbesondere aber auch mehrere akustische Modelle vorgesehen, die jeweils eine eigene semantische Kategorie bilden bzw. dieser zugeordnet sind. Wie beschrieben, können die unterschiedlichen semantischen Kategorien auch durch unterschiedliche Sprachen, bei Auswahl der für eine Sprache spezifischen Lautmodellen, festgelegt werden.

Das Verfahren nach Figur 1 kann auch so betrieben werden, daß einem nicht zuordnungsfähigen Sprachsegment s1 in dem ersten Informationsbereich 32a der Datenbank 32 eine unspezifische Sprachausgabe als Rückfrage folgt, die über den Kanal 80,31 stattfindet. Daraufhin stellt sich das System nicht um. Ein weiterer Versuch mit einem dem Signal $s_a(t)$ ähnlichen Signal soll sicherstellen, daß eine sichere Erkennung des jetzt erwarteten zweiten Sprachsignals erfolgen kann. Das System ist also ohne Zwischenschaltung menschlicher Verstandestätigkeit in der Lage, sich so einzustellen, nur aufgrund von vorgegebenen Systemabläufen, daß eine zuverlässige Erkennung im Anschluß daran robuster und schneller möglich ist. Auf eine geistige Beteiligung des Benutzers kommt es dabei nicht an, seine Reaktion ist durch die Ausgabe des Nachfragesignals bei 31 oder 31a hinsichtlich ihrer Perplexität auf jeden Fall wesentlich geringer, so daß schon allein dadurch eine Verbesserung der Erkennungsfähigkeit erreicht wird. Die Lautsprecher 31,31a können auch dieselben sein.

War zuvor beschrieben, daß für die wesentlich geringere Perplexität des zweiten Sprachsignals der gesamte Bereich der Datenbank zugeschaltet sein kann, kann auch ein Verfahren eingeleitet werden, bei dem das zweite Sprachsignal wiederum mit dem Sprachmodell 4 und des ersten Datenbereichs 32a der Information auf das Auffinden eines Eintrages hin untersucht wird.

Die beschriebenen Varianten können auch kombiniert werden, so die iterative Bestimmung mit der Rückkehr zum ersten Informationsbereich 32a, mit oder ohne Dialogrückfrage 31 oder 31a.

**Patentansprüche**

1. Verfahren zum Steuern eines Auskunftssystems bei der Abgabe von gespeicherten Informationssegmenten über einen Signalgeber (50a) oder zur Steuerung eines technischen Gerätes (G) über eine veranlaßte Aktion (50b), wobei

   (a) in einer Datenbank (32) Nutzinformationen zur Abfrage gespeichert sind, aus denen über ein erstes Sprachsignal $(s_a(t),s_a(z))$ zumindest ein Informationssegment als erstes Datensegment (W1) spezifiziert und über eine Steuerausgabe (20,40,50;50a) kundgegeben wird oder in ein Steuersignal für das technische Gerät (G) umgesetzt wird (50b);
   (b) die Informationen in der Datenbank so organisiert sind, daß dem Sprachsignal ein zunächst beschränkter erster Informationsbereich (32a) an gespeicherter Information zugänglich ist (4,4a,4b), um das spezifizierte Informationssegment daraus auszuwählen;
   (c) ein weiterer Informationsbereich (32b,32c, 32d) der Datenbank (32) als zweiter Informationsbereich aktiviert wird (59,70,4c,4d), wenn das einem Sprachsignalsegment (s1) des ersten Sprachsignals $(s_a(t))$ entsprechende Informationssegment (W1) nicht im ersten Informationsbereich (32a) enthalten ist,

   **dadurch gekennzeichnet, daß** ein Attribut des Sprachsignalsegments (s1) bei der Dekodierung zumindest des Sprachsignalsegments von einem Spracherkennungsmodul (4) ermittelt wird und die Aktivierung des zweiten Informationsbereichs (32b, 32c,32d) der Datenbank von dem ermittelten Attribut des Sprachsignalsegments (s1) zumindest mitabhängig ist.

2. Verfahren nach Anspruch 1, wobei das ermittelte Attribut eine semantische Kategorie (S1) ist.

3. Verfahren nach Anspruch 1, wobei die Kundgabe nach außen (50) die veranlaßte Aktion zur Steuerung des Gerätes ist.

4. Verfahren nach Anspruch 1, wobei nach dem Aktivieren des nächsten Informationsbereiches ein noch weiterer Informationsbereich aktiviert wird, sobald auch aus dem als zweites aktivierten Informationsbereich das spezifizierte Informationssegment nicht verfügbar ist.

5. Verfahren nach einem der vorigen Ansprüche, wobei der zuvor aktivierte Informationsbereich (32a) oder der danach aktivierte Informationsbereich (32b,32c,32d) eine echte Teilmenge der gespeicherten Informationen der Datenbank (32) ist.

**6.** Verfahren nach Anspruch 1, wobei

- über ein wahrnehmbares Signal (31) ein Systemzustand an einen Benutzer übermittelt wird, insbesondere in akustischer Form, um ein zweites Sprachsignal ($s_a(t)$) des Benutzers aufzunehmen und aus der Datenbank (32) den ersten Informationsbereich (32a) erneut zu aktivieren; oder

- nach Erkennen (4) eines Attributs (S1) des Sprachsignalsegments (s1) des ersten Sprachsignals, ohne Auffinden eines korrespondierenden Wortes in dem aktuellen Informationsbereich (32a) der Datenbank, ein wahrnehmbares Signal ($s_{31}(t)$,31a) an einen Benutzer vermittelt wird, um ein anschließend aufzuzeichnendes (2) weiteres Sprachsignal ($s_b(t)$) zu veranlassen, insbesondere dabei der Erkennung (4) praktisch der gesamte Informationsbereich der Datenbank (32) zur Verfügung gestellt wird (5,4b).

**7.** Verfahren nach Anspruch 1, wobei der als erstes aktivierte, beschränkte Informationsbereich (32a) der gespeicherten Information der Datenbank (32) über ein Benutzerprofil (10; 10a, 10b) zumindest teilweise bestimmt wird.

**8.** Verfahren nach Anspruch 1, wobei das Nicht-Enthalten gemäß (c) sich aus einem Schwellenwertvergleich (20) ergibt, insbesondere wenn ein von einem Dekoder (4) aus dem Sprachsignal berechneter Konfidenzwert (K1) unter dem Schwellenwert liegt.

**9.** Verfahren nach Anspruch 1 oder 8, wobei das Nicht-Enthalten gemäß (c) durch eine Erkennung (4) zumindest eines allgemeinen akustischen Modells (OOV) gegeben ist, insbesondere mehrere akustische Modelle Verwendung finden, die jeweils einer eigenen semantischen Kategorie zugeordnet sind.

**10.** Verfahren zum Steuern eines technischen Gerätes (G), insbesondere eines Auskunftssystems, in Antwort auf die Eingabe eines akustischen Signals ($s_a(t)$) zur Freigabe gespeicherter Informationssegmente (W1), wobei

(a) eine Datenbank Nutzinformationen zur Abfrage gespeichert bereithält, aus denen über ein erstes Sprachsignal zumindest ein Informationssegment als erstes Datensegment spezifixiert und über eine Steuerausgabe kundgegeben wird oder in ein Steuersignal für das technische Gerät umgesetzt wird;
(b) eine Signalstufe (30,31a) ein wahrnehmbares Signal ($s_{31}(t)$) abgibt, das einen Signalabschnitt besitzt, der nur einem Teil (T1,s1) des ersten Sprachsignals entspricht, zu dem sich in einem eingeschränkten ersten Informationsbereich (32a) der in der Datenbank (32) gespeicherten Nutzinformationen kein korrespondierendes Wort (W1) befindet, insbesondere kein korrespondierendes Wort mit einer ausreichenden Konfidenz (K1) erkannt werden konnte;

**dadurch gekennzeichnet, daß** nach Abgabe des wahrnehmbaren Signals ($s_{31}(t)$,31a) für ein zweites Sprachsignal ($s_b(t)$), das in einer Sprach- oder Worterkennung als Dekoder (4) dekodiert wird, ein veränderter Bereich der Datenbank (32;32a,32b,32c,32d) verfügbar ist, zum Auswählen eines spezifizierten Informationssegments, das mit zumindest einem zeitlich wesentlichen Abschnitt des zweiten Sprachsignals korrespondiert.

**11.** Verfahren nach Anspruch 10, wobei die Entsprechung zum Teil des Sprachsignals ein mit diesem korrespondierendes Attribut, insbesondere eine semantische Kategorie (S1) ist, wobei der abgegebene Signalabschnitt auf der in einem Dekoder (4) erkannten semantischen Kategorie des Signalteils (T1,s1) beruht.

**12.** Verfahren nach Anspruch 10, wobei der veränderte Bereich der Datenbank (32;32a,32b,32c,32d) im wesentlichen alle Nutzinformation verfügbar macht.

**13.** Verfahren nach Anspruch 1 oder 10, wobei das Sprachsignal in einem Dekoder (4) über akustische Modelle dekodiert wird, zur Bereitstellung eines Konfidenzwerts (K1), einer semantischen Kategorie (S1) zu einem für die Steuerung wesentlichen Abschnitt oder Teil (s1,T1) des Sprachsignals und eines diesem Abschnitt bzw. Teil entsprechenden Wortes (W1).

**14.** Verfahren nach einem der vorherigen Ansprüche, wobei ein Schwellenwert vorgesehen wird, um den aus einer Sprach- oder Worterkennung (4) als akustischem Dekoder ermittelten Konfidenzwert (K1) durch einen Vergleich (20) auf genügende Höhe bzw. ausreichenden Betrag zu prüfen.

**15.** Verfahren nach Anspruch 14, wobei der Vergleich mit dem Schwellenwert stattfindet und abhängig davon die semantische Kategorie eines zu dem Sprachsignalabschnitt (s1) gehörenden Wortes (W1) ausgewertet wird (59,59a,60;70;30,31a) oder das schon erkannte Wort (W1) ausgewertet wird (40,50;50a,50b).

**16.** Verfahren nach Anspruch 1 oder 4, wobei das über das erste Sprachsignal spezifizierte Informationssegment über die Steuerausgabe (40,20,50) ausgegeben wird, wenn ein das spezifische Informationssegment kennzeichnendes Sprachsegment (s1) als Wort (W1) in dem ersten beschränkten Informationsbereich (32a), in dem zweiten beschränkten Informationsbereich oder in einem weiteren, später aktivierten Informationsbereich aufgefunden wird, um das dem Sprachsegment entsprechende Informationssegment kundzugeben, insbesondere über die veranlaßte Aktion ein Gerät anzusteuern.

17. Verfahren nach Anspruch 1, 10 oder 16, wobei die Aktivierung des anderen oder nächsten Informationsbereiches (32a,32b, 32c,32d) abhängig ist von einem Attribut, insbesondere einer semantischen Kategorie des Sprachsignalsegments (s1), das im zuvor aktivierten Informationsbereich (32a) kein korrespondierendes Wort (W1) besaß oder nicht mit genügender Konfidenz ermittelt, erkannt, spezifiziert oder ausgewählt werden konnte.

18. Verfahren nach Anspruch 12, wobei praktisch das vollständige zweite Sprachsignal ($s_b(t)$) dem von ihm spezifizierten Informationssegment (W1) entspricht.

19. Verfahren nach Anspruch 1, wobei nach Aktivieren des zweiten Informationsbereichs nur ein gegenüber dem Sprachsignal reduzierter Sprachsignalabschnitt, insbesondere nur das Sprachsignalsegment (T1,s1) des ersten Sprachsignals in einem Dekoder (4) ausgewertet wird, um daraus ein diesem Segment entsprechendes Informationssegment im zweiten Informationsbereich zu spezifizieren bzw. daraus auszuwählen.

20. Verfahren nach Anspruch 1, wobei nach Erkennen eines Konfidenzwerts und einer semantischen Kategorie (S1,K1) des Sprachsignalsegmentes (s1) ein wahrnehmbares Signal ($s_{31}(t)$;31a) abgegeben wird, das abhängig von der semantischen Kategorie ist, wenn der Konfidenzwert zu gering ist.

21. Einrichtung zum Steuern eines Auskunftssystems bei der Abgabe von gespeicherten Informationssegmenten über einen Signalgeber (50a) oder zur Steuerung eines technischen Gerätes (G) über eine veranlaßte Aktion (50b), wobei

(a) eine Datenbank (32) Nutzinformationen zur Abfrage speichert, aus denen über ein erstes Sprachsignal ($s_a(t)$,$s_a(z)$) zumindest ein Informationssegment als erstes Datensegment (W1) spezifizierbar und über eine Steuerausgabe (20,40,50;50a) kundgebbar ist oder in ein Steuersignal für das technische Gerät (G) umsetzbar ist (50b);
(b) die Informationen in der Datenbank so organisiert sind, daß dem Sprachsignal ein erster Informationsbereich (32a) an gespeicherter Information zugänglich ist (4,4a,4b), um das spezifizierte Informationssegment daraus auszuwählen;

(c1) mit einer Auswerteeinrichtung (60,59,59a,30,70) für eine - einem Sprachsignalsegment (s1) von einer Spracherkennung (4) zugeordneten - Eigenschaft, insbesondere einer semantischen Kategorie (S1), um einen weiteren Informationsbereich eigenschaftsabhängig zu aktivieren,
(c2) wenn ein dem Sprachsignalsegment (s1) des ersten Sprachsignals ($s_a(t)$) entsprechendes Datensegment (W1) nicht mit ausreichender Konfidenz (K1) von der Spracherkennung (4) auswählbar oder im ersten Informationsbereich (32a) nicht enthalten ist.

22. Verfahren nach Anspruch 1 oder 12, wobei der als zweites aktivierte Informationsbereich (32b,32c, 32d) vom zuvor aktivierten Informationsbereich (32a) verschieden ist, insbesondere größer (32c), verlagert (32d) oder gänzlich anders (32b).

23. Verfahren nach Anspruch 1 oder Anspruch 10 oder Einrichtung nach Anspruch 21, wobei nach Auswerten des Attributs, insbesondere der semantischen Kategorie, von der Spracherkennung (4) ein Sprachsignalsegment zur Auswertung zugeführt wird ($s_b(t)$; s1), dessen Perplexität kleiner ist, insbesondere dessen zeitliche Länge (T1) verkürzt ist gegenüber dem von der Spracherkennung (4) ausgewerteten ersten Sprachsignal ($s_a(t)$).

**Claims**

1. Process for the control of an information system during the delivery of stored information segments via a signal transmitter (50a) or for the control of a technical apparatus (G) via a prompted action (50b), wherein

(a) useful information is stored in a database (32) for enquiry, from which at least one information segment is specified as a first data segment (W1) via a first voice signal ($s_a(t)$, $s_a(z)$) and is announced via a control output (20, 40, 50; 50a) or is converted (50b) into a control signal for the technical apparatus (G);
(b) the information in the database is organised so that an initially restricted first information region (32a) of stored information is accessible (4, 4a, 4b) to the voice signal in order to select the specified information segment therefrom;
(c) a further information region (32b, 32c, 32d) of the database (32) as a second information region is activated (59, 70, 4c, 4d) if the information segment (W1) corresponding to a voice signal segment (s1) of the first voice signal ($s_a$(t)) is not present in the first information region (32a),

**characterised in that** an attribute of the voice signal segment (s1) is determined during decoding of at least the voice signal segment by a voice recognition module (4) and activation of the second information region (32b, 32c, 32d) of the database is at least co-dependent on the attribute determined of the voice signal segment (s1).

2. Process according to claim 1, wherein the attribute determined is a semantic category (S1).

3. Process according to claim 1, wherein the announcement to the outside (50) is the prompted action for the control of the apparatus.

4. Process according to claim 1, wherein after activating the next information region, a still further information region is activated as soon as the specified information segment is not available even from the information region activated second.

5. Process according to one of the previous claims, wherein the previously activated information region (32a) or the information region (32b, 32c, 32d) activated thereafter is a true subset of the stored information of the database (32).

6. Process according to claim 1, wherein

   - a system status is transmitted to a user via a perceivable signal (31), in particular in acoustic form, in order to record a second voice signal ($s_a$(t)) of the user and to activate again the first information region (32a) from the database (32); or
   - after recognising (4) an attribute (S1) of the voice signal segment (s1) of the first voice signal without finding a corresponding word in the actual information region (32a) of the database, a perceivable signal ($s_{31}$(t), 31a) is imparted to a user in order to prompt a further voice signal ($s_b$(t)) subsequently to be recorded (2), in particular thus virtually the entire information region of the database (32) is provided (5, 4b) for recognition (4).

7. Process according to claim 1, wherein the restricted information region (32a) of the stored information of the database (32) activated first is at least partly determined via a user profile (10; 10a, 10b).

8. Process according to claim 1, wherein the not-present according to (c) is produced from a threshold value comparison (20), in particular when a confidence value (K1) calculated from the voice signal by a decoder (4) lies below the threshold value.

9. Process according to claim 1 or 8, wherein the not-present according to (c) is given by a recognition (4) at least of a general acoustic model (OOV), in particular several acoustic models are used which are assigned in each case to a separate semantic category.

10. Process for the control of a technical apparatus (G), in particular an information system, in response to the input of an acoustic signal ($s_a$(t)) for the release of stored information segments (W1), wherein

    (a) a database has ready useful information stored for enquiry, from which at least one information segment as a first data segment is specified via a first voice signal and is announced via a control output or is converted into a control signal for the technical apparatus;
    (b) a signal stage (30, 31a) delivers a perceivable signal ($s_{31}$(t)) which has a signal section which corresponds to only a part (T1, s1) of the first voice signal, to which no corresponding word (W1) is found in a restricted first information region (32a) of the useful information stored in the database (32), in particular no corresponding word could be recognised with adequate confidence (K1);

    **characterised in that** after delivery of the perceivable signal ($s_{31}$(t), 31a) for a second voice signal ($s_b$(t)), which is decoded in a voice or word recognition as decoder (4), a modified region of the database (32; 32a, 32b, 32c, 32d) is available, for selecting a specified information segment, which corresponds to at least one temporally considerable section of the second voice signal.

11. Process according to claim 10, wherein the correspondence to the part of the voice signal is an attribute corresponding to the latter, in particular a semantic category (S1), wherein the delivered signal section is based on the semantic category of the signal part (T1, s1) recognised in a decoder (4).

12. Process according to claim 10, wherein the modified region of the database (32; 32a, 32b, 32c, 32d) makes available essentially all useful information.

13. Process according to claim 1 or 10, wherein the voice signal is decoded in a decoder (4) via acoustic models, for providing a confidence value (K1), a semantic category (S1) for a section or part (S1, T1) of the voice signal which is essential for control and a word (W1) corresponding to this section or part.

14. Process according to one of the preceding claims, wherein a threshold value is provided in order to test the confidence value (K1) determined from voice or word recognition (4) as an acoustic decoder, by a comparison (20), for adequate height or adequate amount.

15. Process according to claim 14, wherein the comparison with the threshold value takes place and depending thereon, the semantic category of a word (W1) belonging to the voice signal section (s1) is evaluated (59, 59a, 60; 70; 30, 31a) or the word (W1) already recognised is evaluated (40, 50; 50a, 50b).

16. Process according to claim 1 or 4, wherein the information segment specified via the first voice signal is output via the control output (40, 20, 50) when a voice segment (s1) characterising the specific information segment is found as a word (W1) in the first restricted information region (32a), in the second restricted information region or in a further, later activated information region, in order to announce the information segment corresponding to the voice segment, in particular to control an apparatus via the prompted action.

17. Process according to claim 1, 10 or 16, wherein the activation of the other or next information region (32a, 32b, 32c, 32d) is dependent on an attribute, in particular a semantic category of the voice signal segment (s1), which in the previously activated information region (32a) had no corresponding word (W1) or could not be determined, recognised, specified or selected with adequate confidence.

18. Process according to claim 12, wherein virtually the complete second voice signal ($s_b(t)$) corresponds to the information segment (W1) specified by it.

19. Process according to claim 1, wherein after activating the second information region, only one voice signal section which is reduced with respect to the voice signal, in particular only the voice signal segment (T1, sl) of the first voice signal is evaluated in a decoder (4), in order to specify therefrom or select therefrom an information segment corresponding to this segment in the second information region.

20. Process according to claim 1, wherein, after recognising a confidence value and a semantic category (S1, K1) of the voice signal segment (s1), a perceivable signal ($s_{31}(t)$; 31a) is delivered, which is dependent on the semantic category if the confidence value is too low.

21. Device for the control of an information system during the delivery of stored information segments via a signal transmitter (50a) or for the control of a technical apparatus (G) via a prompted action (50b), wherein

    (a) a database (32) stores useful information for enquiry, from which at least one information segment can be specified as a first data segment (W1) via a first voice signal ($s_a(t)$, $s_a(z)$) and can be announced via a control output (20, 40, 50; 50a) or can be converted (50b) into a control signal for the technical apparatus (G);
    (b) the information in the database is organised so that a first information region (32a) of stored information is accessible (4, 4a, 4b) to the voice signal in order to select the specified information segment therefrom;

        (c1) with an evaluating device (60, 59, 59a, 30, 70) for a property - assigned to a voice signal segment (s1) by voice recognition (4) -, in particular a semantic category (S1), in order to activate a further information region depending on the property,
        (c2) when a data segment (W1) corresponding to the voice signal segment (s1) of the first voice signal ($s_a(t)$) cannot be selected with adequate confidence (K1) by voice recognition (4) or is not present in the first information region (32a).

22. Process according to claim 1 or 12, wherein the information region (32b, 32c, 32d) activated second is different from the previously activated information region (32a), in particular larger (32c), displaced (32d) or completely different (32b).

23. Process according to claim 1 or claim 10 or device according to claim 21, wherein after evaluating the attribute, in particular the semantic category, by voice recognition (4), a voice signal segment is supplied ($s_b(t)$; s1) for evaluation, the perplexity of which is less, in particular its temporal length (T1) is shortened with respect to the first voice signal ($s_a(t)$) evaluated by voice recognition (4).

## Revendications

1. Procédé de commande d'un système d'information lors de la délivrance de segments d'information mémorisés via un émetteur de signal (50a) ou de commande d'un appareil technique (G) via une action suscitée (50b), dans lequel :

(a) sont enregistrées dans une banque de données (32) des informations utiles à des fins d'interrogation et à partir desquelles, via un premier signal vocal $(S_a(t),S_a(z))$, au moins un segment d'information est spécifié sous la forme d'un premier segment de données (W1) et est exprimé par une sortie de commande (20,40,50;50a) ou est transformé en un signal de commande (50b) pour l'appareil technique (G) ;

(b) les informations de la banque de données sont organisées de sorte qu'une première zone d'information d'abord réduite (32a) d'informations mémorisées (4,4a,4b) soit accessible au signal vocal pour en sélectionner le segment d'information spécifié ;

(c) une autre zone d'information (32b,32c,32d) de la banque de données (32) est activée comme deuxième zone d'information (59,70,4c,4d) lorsque le segment d'information (W1) correspondant à un segment (s1) du premier signal vocal $(s_a(t))$ n'est pas contenu dans la première zone d'information (32a),

**caractérisé en ce qu'**un attribut du segment de signal vocal (s1) est déterminé lors du décodage au moins du segment de signal vocal d'un module de reconnaissance vocale (4) et l'activation de la deuxième zone d'information (32b,32c,32d) de la banque de données est au moins co-dépendante de l'attribut déterminé du segment de signal vocal (s1).

2. Procédé selon la revendication 1, dans lequel l'attribut déterminé est une catégorie sémantique (S1).

3. Procédé selon la revendication 1, dans lequel l'expression vers l'extérieur (50) est l'action suscitée pour la commande de l'appareil.

4. Procédé selon la revendication 1, dans lequel, après l'activation de la zone d'information suivante, une zone d'information encore différente est activée dès que le segment d'information spécifié n'est pas disponible non plus comme deuxième zone d'information activée.

5. Procédé selon l'une quelconque des revendications précédentes, dans lequel la zone d'information activée précédemment (32a) ou la zone d'informations activée ensuite (32b,32c,32d) est une véritable quantité partielle des informations mémorisées de la banque de données (32).

6. Procédé selon la revendication 1, dans lequel :

 - un état du système est transmis via un signal perceptible (31) à un utilisateur, en particulier sous forme acoustique, afin de capter un deuxième signal vocal $(s_a(t))$ de l'utilisateur et réactiver la première zone d'information (32a) à partir de la banque de données (32) ; ou

 - après reconnaissance (4) d'un attribut (S1) du segment (s1) du premier signal vocal, sans détection d'un mot correspondant dans la zone d'information actuelle (32a) de la banque de données (32), un signal perceptible $(S_{31}(t),31a)$ est transmis à un utilisateur pour susciter un autre signal vocal $(s_b(t))$ à enregistrer ensuite (2), pratiquement toute la zone d'informations de la banque de données (32) étant affectée (5, 4b) en particulier à la reconnaissance (4).

7. Procédé selon la revendication 1, dans lequel la zone d'information réduite activée en premier (32a) des informations mémorisées de la banque de données (32) est au moins partiellement déterminée via un profil d'utilisateur (10; 10a, 10b).

8. Procédé selon la revendication 1, dans lequel l'absence de contenu selon (c) résulte d'une comparaison de valeurs seuil (20), en particulier lorsqu'une valeur de confiance (K1) calculée par un décodeur (4) à partir du signal vocal se situe en dessous de la valeur seuil.

9. Procédé selon la revendication 1 ou 8, dans lequel l'absence de contenu selon (c) est donnée par une reconnaissance (4) d'au moins un modèle acoustique général (OOV), en utilisant en particulier plusieurs modèles acoustiques qui sont affectés, respectivement, à une catégorie sémantique propre.

10. Procédé de commande d'un appareil technique (G), en particulier d'un système d'information, en réponse à l'entrée d'un signal acoustique $(s_a(t))$ pour la libération de segments d'information mémorisés (W1), dans lequel :

 (a) une banque de données tient à disposition sous forme enregistrée à des fins d'interrogation des informations utiles, à partir desquelles au moins un segment d'information est spécifié via un premier signal vocal comme premier segment de données et s'exprime par une sortie de commande ou est converti en un signal de commande pour l'appareil technique ;

 (b) un étage de signal (30,31a) délivre un signal perceptible $(s_{31}(t))$ qui possède un segment de signal qui ne correspond qu'à une partie (T1,s1) du premier signal vocal pour laquelle il ne se trouve pas de mot correspondant (W1) dans une première zone d'information réduite (32a) des informations utiles enregistrées dans la banque de données (32), en particulier aucun mot correspondant n'ayant pu être reconnu avec une confiance suffisante (K1) ;

**caractérisé en ce qu'**après avoir délivré le signal perceptible ($s_{31}$(t),31a) pour un deuxième signal vocal ($s_b$(t)), qui est décodé par reconnaissance vocale ou reconnaissance de mots comme décodeur (4), une zone modifiée de la banque de données (32;32a,32b,32c,32d) est disponible, pour sélectionner un segment d'information spécifié qui correspond à au moins un segment essentiel dans le temps du deuxième signal vocal.

11. Procédé selon la revendication 10, dans lequel la correspondance avec la partie du signal vocal est un attribut correspondant à celui-ci, en particulier une catégorie sémantique (S1), dans lequel le segment de signal délivré repose sur la catégorie sémantique de la partie de signal (T1,s1) admise dans un décodeur (4).

12. Procédé selon la revendication 10, dans lequel la zone modifiée de la banque de données (32;32a, 32b,32c,32d) rend disponibles essentiellement toutes les informations utiles.

13. Procédé selon la revendication 1 ou 10, dans lequel le signal vocal est décodé dans un décodeur (4) via des modèles acoustiques pour préparer une valeur de confiance (K1), une catégorie sémantique (51) par rapport à un segment ou une partie (s1, T1) du signal vocal essentiel (le) pour la commande, et un mot (W1) correspondant à ce segment ou à cette partie.

14. Procédé selon l'une quelconque des revendications précédentes, dans lequel il est prévu une valeur seuil pour contrôler la valeur de confiance (K1) déterminée à partir d'une reconnaissance vocale ou d'une reconnaissance (4) de mots comme décodeur acoustique par une comparaison (20) de la hauteur suffisante ou du montant suffisant.

15. Procédé selon la revendication 14, dans lequel a lieu la comparaison avec la valeur seuil et dans lequel est évaluée (59,59a,60;70;30,31a), en fonction de cela, la catégorie sémantique d'un mot (W1) appartenant au segment de signal vocal (s1) ou dans lequel est évalué (40,50;50a,50b) le mot déjà reconnu (W1).

16. Procédé selon la revendication 1 ou 4, dans lequel le segment d'information spécifié via le premier signal vocal est délivré par la sortie de commande (40,20,50) lorsqu'un segment vocal (s1) caractérisant le segment d'information spécifique comme mot (W1) de la première zone d'information réduite (32a) est trouvé dans la deuxième zone d'information réduite ou dans une autre zone d'information activée ensuite afin d'exprimer le segment d'information correspondant au segment vocal, en particulier pour commander un appareil via l'action suscitée.

17. Procédé selon la revendication 1, 10 ou 16, dans lequel l'activation de l'autre zone d'information ou de la zone d'information suivante (32a,32b,32c, 32d) est dépendante d'un attribut, en particulier d'une catégorie sémantique du segment de signal vocal (s1), qui ne possédait pas de mot correspondant (W1) dans la zone d'information activée précédemment (32a) ou qui n'a pu être déterminée, reconnue, spécifiée ou sélectionnée avec une confiance suffisante.

18. Procédé selon la revendication 12, dans lequel pratiquement tout le deuxième signal vocal ($s_b$(t)) correspond au segment d'information (W1) spécifié par celui-ci.

19. Procédé selon la revendication 1, dans lequel, après activation de la deuxième zone d'information, on n'évalue qu'un segment de signal vocal réduit par rapport au signal vocal, en particulier seulement le segment (T1,s1) du premier signal vocal dans un décodeur (4) pour en spécifier ou en sélectionner un segment d'information correspondant à ce segment dans la deuxième zone d'information.

20. Procédé selon la revendication 1, dans lequel, après reconnaissance d'une valeur de confiance et d'une catégorie sémantique (S1,K1) du segment de signal vocal (s1), est délivré un signal perceptible (s31(t);31a), qui est dépendant de la catégorie sémantique lorsque la valeur de confiance est trop faible.

21. Dispositif de commande d'un système d'information lors de la délivrance de segments d'information mémorisés via un émetteur de signal (50a) ou de commande d'un appareil technique (G) via une action suscitée (50b), dans lequel :

(a) une banque de données (32) mémorise à des fins d'interrogation des informations utiles à partir desquelles, via un premier signal vocal ($S_a$(t),$S_a$(z)), au moins un segment d'information peut être spécifié comme premier segment de données (W1) et peut être exprimé par une sortie de commande (20,40,50;50a) ou peut être transformé en un signal de commande (50b) pour l'appareil technique (G) ;
(b) les informations de la banque de données sont organisées de sorte qu'une première zone d'information (32a) contenant des informations mémorisées (4,4a,4b) soit accessible au signal vocal pour en sélectionner le segment d'information spécifié ;

(c1) avec un dispositif d'évaluation (60,59,59a,30,70) pour une propriété affectée à un segment de signal vocal (s1) par une reconnaissance vocale (4), en particulier une catégorie sémantique (S1), pour activer une autre zone d'information en fonction de la propriété,

(c2) lorsqu'un segment de données (W1) correspondant au segment (s1) du premier signal vocal ($s_a(t)$) ne peut être choisi avec une confiance suffisante (K1) par la reconnaissance vocale (4) ou n'est pas contenu dans la première zone d'information (32a).

22. Procédé selon la revendication 1 ou 12, dans lequel la zone d'information activée en second (32b,32c, 32d) est différente de la zone d'information activée précédemment (32a), en particulier plus grande (32c), déplacée (32d) ou complètement différente (32b).

23. Procédé selon la revendication 1 ou la revendication 10 ou dispositif selon la revendication 21, dans lequel, après évaluation de l'attribut, en particulier de la catégorie sémantique, est acheminé ($s_b(t)$; s1) par la reconnaissance vocale (4) un segment de signal vocal (4) pour évaluation, dont la perplexité est plus petite, en particulier dont la longueur temporelle (T1) est raccourcie par rapport au premier signal vocal ($s_a(t)$) évalué par la reconnaissance vocale (4).

Fig. 1

Fig.2

RAM

FFFF

{ 32b

32a

32 →

32c

0000

*Fig. 3*

$s_a(t)$

s1

$s_b(t)$

4b
4d →

4

→ W

→ K

→ S

*Fig. 3a*

32a

*Fig. 3b*

32b

32a

32d

*Fig. 3c*

32a

32c

Fig. 4

/a/
/a:/
/au/
/ax/
/b/
/d/
/eh/
/eh:/
/ey/
/f/
/g/
...
/z/
/zh/
S

$W_{(p1/p2)}$

Z1

P

EP 1 330 817 B1